(19) Europäisches Patentamt
European Patent Office
Office européen des brevets

(11) **EP 3 809 371 A1**

(12) **EUROPÄISCHE PATENTANMELDUNG**

(43) Veröffentlichungstag:
**21.04.2021 Patentblatt 2021/16**

(51) Int Cl.:
***G06T 7/521*** *(2017.01)*    ***G06T 7/593*** *(2017.01)*
***B24B 9/14*** *(2006.01)*    ***G01B 11/24*** *(2006.01)*

(21) Anmeldenummer: **19203172.2**

(22) Anmeldetag: **15.10.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Carl Zeiss Vision International GmbH 73430 Aalen (DE)**

(72) Erfinder:
• **CARLS, Jörg 73655 Plüderhausen (DE)**
• **SCHWARZ, Oliver 73479 Ellwangen (DE)**

(74) Vertreter: **Tautz, Raphael Gerhard Tautz & Schuhmacher Patentanwälte GbR Nibelungenstraße 84 80639 München (DE)**

(54) **VERFAHREN UND VORRICHTUNG ZUM BESTIMMEN EINER KONTUR EINER FASSUNGSNUT**

(57) Die vorliegende Erfindung betrifft ein Verfahren zum Bestimmen einer Kontur (34) einer Fassungsnut (12c) in einem Fassungsrand (12a) einer Brillenfassung (12). Das Verfahren umfasst ein Beleuchten des Fassungsrandes (12a), ein Erfassen mehrerer Bilder des beleuchteten Fassungsrandes (12a) aus unterschiedlichen vorbestimmten Perspektiven und ein Auswerten der erfassten Bilder und Bestimmen einer Raumkurve der Fassungsnut (12c) anhand der ausgewerteten Bilder. Das Verfahren ist dadurch gekennzeichnet, dass das Beleuchten des Fassungsrandes (12a) entlang des gesamten Umfangs des Fassungsrandes (12a) mittels einer gerichteten Beleuchtung erfolgt. Zudem ist das Verfahren dadurch gekennzeichnet, dass das Auswerten der erfassten Bilder ein Zuordnen von in den erfassten Bildern enthaltenen Teilflächen zu jeweils einem Flächenelement (F1,..., F5) der Fassungsnut (12c) anhand zumindest einer der folgenden Eigenschaften umfasst: Schattierung der jeweiligen Teilfläche, Helligkeit der jeweiligen Teilfläche und Phasenlage der Beleuchtung der jeweiligen Teilfläche. Außerdem betrifft die Erfindung eine Vorrichtung (10) ein Computerprogramm, ein Verfahren zum Einschleifen eines Brillenglases und ein computerimplementiertes Verfahren zur Bestimmung einer Geometrie eines Brillenglases.

Fig. 6

EP 3 809 371 A1

**Beschreibung**

Die vorliegende Erfindung betrifft ein Verfahren und eine Vorrichtung zum Bestimmen einer Kontur einer Fassungsnut in einem Fassungsrand einer Brille nach dem Oberbegriff der Patentansprüche 1 und 7. Die Erfindung betrifft ferner ein Computerprogrammprodukt und eine Verwendung einer Vorrichtung zur Scheitelwertbestimmung und/oder einer Vorrichtung zur Erstellung einer ortsaufgelösten Brechwert-Karte. Die Erfindung liegt daher insbesondere auf dem technischen Gebiet von Brillen.

Für das Einschleifen von Brillengläsern zur Einfassung, d.h. zur Anpassung des Brillenglases an die Abmessungen der Fassungsränder der jeweiligen Brillenfassung, müssen die Kontur des Fassungsrandes und insbesondere der Nut im Fassungsrand vermessen werden, sodass die Abmessungen und der Verlauf der Kontur als digitale Informationen vorliegen. Die Kontur wird sodann für das Einschleifen der Brillengläser verwendet. Die Vermessung der Nut bzw. des Fassungsrandes erfolgt herkömmlicherweise mittels eines taktilen Tracers, welcher mit einer Messnadel in die Nut des Fassungsrandes eintaucht und diese mechanisch abtastet und dabei eine sogenannte Trace bzw. Spur abfährt. Die dabei ermittelten Informationen werden zumeist als zweidimensionale oder dreidimensionale Koordinaten der Nut bereitgestellt. Die benötigte Messgenauigkeit liegt in der Regel bei ca. 1/10 Millimeter bzw. 100 $\mu$m, um den passgenauen Sitz des Brillenglases in der Brillenfassung bzw. in der Nut zu gewährleisten.

Es ist seit langem ein Wunsch in der Branche, den Arbeitsablauf für den Benutzer zu vereinfachen und insbesondere die bei taktilen Tracern häufig erforderliche Nachkalibrierung der Tastköpfe zu vermeiden. Es gab bereits Ansätze, die taktile Messung zu diesem Zweck durch eine optische Messung zu ersetzen, jedoch konnte keiner der Ansätze die benötigte Messgenauigkeit und die Verlässlichkeit in einem wirtschaftlich sinnvollen Kostenrahmen bereitstellen.

Die Anforderungen für die Bestimmung der Konturen der Fassungsnuten sind dabei unter anderem, dass die Konturen für beide Fassungsnuten einer Brillenfassung separat voneinander bestimmt werden können, da Toleranzen in den Fertigungsprozessen der Brillenfassungen zu Asymmetrie der beiden Fassungsränder führen können, die die Toleranzgrenzen für das Einschleifen der Gläser überschreiten. Insbesondere müssen Asymmetrien erfasst werden, die zu Abweichungen größer als 0,1 mm zwischen den Fassungsrändern führen. Die absolute geometrische Ungenauigkeit der Fassungskontur darf maximal 0,1 mm betragen, so dass die auf Basis der bestimmten Kontur eingeschliffenen Gläser bündig d.h. ohne zu wackeln, in der Fassung sitzen.

Auch müssen die Fassungsränder unabhängig von Material und Farbe der Fassung und unabhängig von der Streuung bzw. Reflektanz des Fassungsmaterials erfasst werden können.

Aus der DE19937647C1 ist eine Vorrichtung und ein Verfahren zur Bestimmung der Fassungskontur bekannt, bei denen versucht wird, mittels einer Kamera und einer Einrichtung zur Erzeugung einer Taumelbewegung verschiedene Ansichten der Nut aufgenommen werden. Die Taumelbewegung kann dabei a) von Stellmotoren erzeugt werden, oder b) mittels eines drehbaren Spiegels, der unterhalb der Kamera und unterhalb der zu vermessenden Fassung montiert ist. Eine ähnliche Vorrichtung ist aus der DE4019866A1 bekannt.

Aus der FR2763707A ist eine Vorrichtung zum Bestimmen des Scheitelbrechwerts und der Fassungskontur einer Brille bekannt, bei der die Brille von hinten mit einer Flächenlichtquelle (z.B. halbtransparenter Schirm) beleuchtet wird. Die 2D Kontur des Fassungsrandes wird an Hand der im Kamerabild sichtbaren Silhouette bestimmt, wobei zusätzlich zur Bestimmung der Kontur der Nut einige Nadeln motorisiert bzw. mit Federn in die Nut eingeführt und die Position der Nadeln bestimmt werden.

Aus der DE4224640A ist ein Gerät bekannt, mit welchem eine in Form eines "V" geformte Nut optisch rekonstruiert werden soll. Dabei werden mittels zweier Lichtquellen und entsprechenden Optiken zwei parallele Lichtbündel aus zwei verschiedenen Winkeln auf die Nut gerichtet und das reflektierte bzw. gestreute Licht mit einer Kamera aufgenommen. Die drei ausgezeichneten Punkte des "V" werden mittels Triangulation rekonstruiert. Die Fassungsnut wird mit einer DrehEinrichtung jeweils ins Messfeld verfahren.

Aus der US9316489B2 ist ein Gerät bekannt, mit welchem mittels einer Laserlinie, Kameras, Linearantrieb und Drehtisch die Fassung als 3D Modell rekonstruiert werden soll. Bei jeder Bildaufnahme wird jeweils ein Profilschnitt erzeugt. Das gesamte 3D-Modell ergibt sich aus der Gesamtmenge der Profilschnitte.

Aus der DE19727226A1 ist eine Vorrichtung zum Bestimmen der Raumform der Nut bekannt, bei der ein Lichtstrahl bzw. eine Laserlinie mittels Umlenkspiegeln zentrisch auf die Nut gerichtet wird. Die Raumform der Nut wird mittels Triangulation bestimmt. Auch hier muss die Fassung mittels eines Drehtischs bewegt werden. Bei jeder Bildaufnahme wird jeweils ein Profilschnitt erzeugt.

Bekannt sind außerdem diverse taktile Tracer, welche die Konturen der beiden Fassungsränder einer Brille mit einer Genauigkeit von ca. 0,01 mm und einer Messzeit von insgesamt ca. 30 sec (für 16.000 Messpunkte, 2 Fassungsöffnungen) bestimmen können. Dabei wird ein drehbar gelagerter Taststift entlang der Nut geführt. Dabei wird auf die Nut und somit auf den Fassungsrand eine Kraft ausgeübt, wie beispielsweise in" http://www.ftpuso.com/brochurepdf/Huvitz/HFR-8000.pdf" heruntergeladen am 30. September 2019, [1] beschrieben.

Keines der bekannten Verfahren oder Vorrichtungen ist in der Lage, die gesamte Kontur und das Profil der Nut in kurzer Zeit, d.h. mit nur wenigen Bildaufnahmen, in der Zielgenauigkeit von 0,1 mm zu bestimmen.

Ausgehend von der DE19937647C1 besteht die Aufgabe der vorliegenden Erfindung darin, ein Verfahren und eine Vorrichtung bereitzustellen, mittels welcher eine verlässliche, einfache und kostengünstige Bestimmung der Kontur einer Fassungsnut ermöglicht wird.

Die Aufgabe wird gelöst durch Verfahren, eine Vorrichtung, ein Computerprogrammprodukt und eine Verwendung mit den Merkmalen des jeweiligen unabhängigen Anspruchs. Bevorzugte Ausführungsformen sind Gegenstände der abhängigen Ansprüche.

In einem ersten Aspekt betrifft die Erfindung ein Verfahren zum Bestimmen einer Kontur einer Fassungsnut in einem Fassungsrand einer Brille. Das Verfahren umfasst ein Beleuchten des Fassungsrandes, ein Erfassen mehrerer Bilder des beleuchteten Fassungsrandes aus unterschiedlichen vorbestimmten Perspektiven und ein Auswerten der erfassten Bilder und Bestimmen einer Raumkurve der Fassungsnut anhand der ausgewerteten Bilder. Das Verfahren ist dadurch gekennzeichnet, dass das Beleuchten des Fassungsrandes entlang des gesamten Umfangs des Fassungsrandes mittels einer gerichteten Beleuchtung erfolgt. Ferner ist das Verfahren dadurch gekennzeichnet, dass das Auswerten der erfassten Bilder ein Zuordnen von in den erfassten Bildern enthaltenen Teilflächen zu jeweils einem Flächenelement der Fassungsnut anhand zumindest einer der folgenden Eigenschaften umfasst: Schattierung der jeweiligen Teilfläche, Helligkeit der jeweiligen Teilfläche und Phasenlage der Beleuchtung der jeweiligen Teilfläche.

In einem weiteren Aspekt betrifft die Erfindung eine Vorrichtung zum kontaktlosen Bestimmen einer Kontur einer Fassungsnut in einem Fassungsrand einer Brille. Die Vorrichtung umfasst eine Beleuchtungseinrichtung, welche dazu ausgelegt ist, den Fassungsrand zu beleuchten, eine Bilderfassungseinrichtung, welche dazu eingerichtet ist, mehrere Bilder des beleuchteten Fassungsrandes aus unterschiedlichen vorbestimmten Perspektiven zu erfassen und eine Bildauswerteeinheit, welche dazu eingerichtet ist, die erfassten Bilder auszuwerten und die ausgewerteten Bilder für eine Bestimmung einer Raumkurve der Fassungsnut bereitzustellen. Die Vorrichtung ist dadurch gekennzeichnet, dass die Beleuchtungseinrichtung dazu ausgelegt ist, den Fassungsrand entlang des gesamten Umfangs des Fassungsrandes mit einer gerichteten Beleuchtung zu beleuchten, und dass das Auswerten der erfassten Bilder ein Zuordnen von in den erfassten Bildern enthaltenen Teilflächen zu jeweils einem Flächenelement der Fassungsnut anhand zumindest einer der folgenden Eigenschaften umfasst: Schattierung der jeweiligen Teilfläche, Helligkeit der jeweiligen Teilfläche und Phasenlage der Beleuchtung der jeweiligen Teilfläche.

In einem weiteren Aspekt betrifft die Erfindung ein Computerprogrammprodukt, das ein nicht-flüchtiges, computerlesbares Speichermedium umfasst, auf dem ein ausführbarer Programmcode gespeichert ist, der konfiguriert ist, um eine Vorrichtung dazu zu veranlassen, ein erfindungsgemäßes Verfahren durchzuführen.

In einem weiteren Aspekt betrifft die Erfindung eine Verwendung einer Vorrichtung zur Scheitelbrechwertbestimmung oder eine Vorrichtung zur Erstellung einer ortsaufgelösten Brechwert-Karte zum Bestimmen einer Kontur einer Fassungsnut in einem Fassungsrand einer Brille bzw. einer Brillenfassung.

In einem weiteren Aspekt betrifft die Erfindung ein Verfahren zum Einschleifen eines Brillenglases in eine Brillenfassung, wobei eine Kontur einer Fassungsnut in einem Fassungsrand der Brillenfassung mittels eines erfindungsgemäßen Verfahrens bestimmt wurde oder bestimmt wird.

In einem weiteren Aspekt betrifft die Erfindung ein computerimplementiertes Verfahren zur Bestimmung einer Geometrie eines Brillenglases unter Verwendung einer Kontur einer Fassungsnut in einem Fassungsrand einer Brillenfassung, für welche das Brillenglas bereitgestellt werden soll, wobei die Kontur mittels eines erfindungsgemäßen Verfahrens bestimmt wurde oder bestimmt wird.

Der Fassungsrand ist dabei die Oberfläche einer Brillenfassung, welche einem in den jeweiligen Fassungsrand der Brillenfassung eingesetzten Brillenglas zugewandt ist und an das Brillenglas angrenzt. Mit anderen Worten ist der Fassungsrand die Fläche, welche die Öffnung der Brillenfassung begrenzt, in welche ein Brillenglas in die Brillenfassung eingesetzt werden kann. Der Umfang des Fassungsrandes ist dabei vorzugsweise ein Innenumfang des Fassungsrandes. Die in einem Bild sichtbare innere Kontur des Fassungsrandes wird auch als Fassungsrandkontur bezeichnet.

Die Fassungsnut, welche auch lediglich als Nut bezeichnet wird, ist dabei ein im Fassungsrand vorhandenes Profil, welches vorzugsweise orthogonal zum Fassungsrand verläuft. Beispielsweise kann die Fassungsnut als Einkerbung und/oder Einfräsung im Fassungsrand ausgebildet sein. Die Fassungsnut kann beispielsweise exakt oder näherungsweise im Querschnitt eine V-Form aufweisen.

Die Kontur der Fassungsnut ist dabei vorzugsweise eine dreidimensionale Raumkurve, welche den Verlauf und/oder die Abmessungen der Fassungsnut wiedergibt. Beispielsweise kann die Raumkurve mittels dreidimensionaler Koordinaten, bspw. als Punktmenge von Raumpunkten, und insbesondere als Satz von Raumkurven bereitgestellt sein. Ein Raumpunkt ist dabei vorzugsweise ein Tupel von zweidimensionalen Koordinaten oder ein Tripel von dreidimensionalen Koordinaten, welches die Position des Raumpunktes in einem vorbestimmten Koordinatensystem festlegt. Das vorbestimmte Koordinatensystem kann vorzugsweise ein relatives Koordinatensystem darstellen, beispielsweise relativ zu einem optischen Zentrum der Bilderfassungseinheit und/oder relativ zu einer durch ein Markerelement definierten Position.

Dass der Fassungsrand entlang des gesamten Umfangs beleuchtet wird, bedeutet dabei, der Fassungsrand nicht entlang seines Umfangs sequentiell von der Beleuchtung überstrichen wird sondern vorzugsweise zeitgleich auf seinem gesamten Umfang beleuchtet wird. Dass die Beleuchtung unter Umständen nicht gänzlich in die Fassungsnut eindringen kann, steht der Beleuchtung entlang des gesamten Umfangs nicht entgegen.

Die gerichtete Beleuchtung ist dabei eine Beleuchtung, die vorzugsweise aus einer vorgegebenen Richtung kommend auf den Fassungsrand einfällt. Besonders bevorzugt kann die Beleuchtung aus einer Punktlichtquelle stammen und/oder aus einer Flächenbeleuchtung aus einer vorbestimmten Richtung. Die gerichtete Beleuchtung ist vorzugsweise derart gewählt, dass diese einen möglichst präzisen Schattenwurf an der Fassungsnut erzeugt. Eine gerichtete Beleuchtung kann beispielsweise dadurch erzielt werden, dass die Brillenfassung nur aus einer Richtung relativ zur Bilderfassungseinrichtung einfällt, beispielsweise mittels Auflicht aus der Richtung, in welcher auch die Bildauswerteeinheit relativ zur Brillenfassung angeordnet ist oder aus der gegenüberliegenden Richtung der Brillenfassung, von der der Bilderfassungseinrichtung abgewandten Seite der Brillenfassung. Die Bilderfassungseinrichtung kann demnach Flächenstrahler aufweisen, wie beispielsweise ein Display und/oder ein OLED Leuchtelement. Alternativ oder zusätzlich kann jedoch die Beleuchtungseinrichtung die gerichtete Beleuchtung auch mittels einer oder mehrerer Punktlichtquellen bereitstellen, welche den Fassungsrand aus einer vorbestimmten Richtung beleuchtet und einen möglichst präzisen Schattenwurf an der Fassungsnut erzeugt. Beispielsweise kann eine Punktlichtquelle als eine Glühlampe und/oder eine LED und/oder eine Laserdiode und/oder ein Laser ausgebildet sein.

Die Schattierung der jeweiligen Teilflächen ist dabei eine Eigenschaft der jeweiligen Teilfläche, die durch eine unterschiedliche Lichtstärke der auf die Teilfläche einfallenden Beleuchtung bzw. die Abschattung der jeweiligen Teilfläche von der Beleuchtung hervorgerufen wird. Unterschiedliche Teilflächen, die der Beleuchtung unterschiedlich stark ausgesetzt sind und/oder von der Beleuchtung unterschiedlich stark abgeschattet sind, weisen demnach eine unterschiedliche Schattierung und/oder eine unterschiedliche Helligkeit auf. Anhand der Schattierung (in den Bildern) können somit vorzugsweise verschiedene Teilflächen in den erfassten Bildern identifiziert werden, welche vorzugsweise einem Flächenelement der Fassungsnut (im Raum) zugeordnet werden. Übergänge zwischen verschiedenen Helligkeiten und/oder Schattierungen können beispielsweise als Übergänge zwischen angrenzenden Teilflächen gewertet werden, welche sodann auch als Übergänge zwischen angrenzenden Flächenelementen gewertet werden können. Anhand dieser Flächenelemente können sodann mehrere Raumpunkte (im Raum) ermittelt werden, welche die Fassungsnut bzw. insbesondere die Lage und Abmessung des Querschnitts der Fassungsnut kennzeichnen. Beispielsweise kann der Querschnitt der Fassungsnut an jeder Position der Fassungsnut entlang des Verlaufs der Fassungsnut durch fünf Raumpunkte erfasst werden, wobei zwischen den Raumpunkten die Flächenelemente verlaufen. In einer Vereinfachung kann die im Nutgrund verlaufende Kontur im Profilschnitt durch einen einzigen Raumpunkt gekennzeichnet sein. In einer anderen Vereinfachung kann der Querschnitt des Nutprofils durch nur drei Raumpunkte gekennzeichnet sein, wobei einer der Raumpunkte im Querschnitt den Nutgrund und die zwei weiteren Punkt die jeweiligen Übergänge zwischen Nutflanke und Fassungsrand kennzeichnet. Gemäß weiterer Ausführungsformen können auch mehr als fünf Raumpunkte erfasst werden, um das Querschnittprofil der Fassungsnut zu modellieren.

Ein Flächenelement ist dabei beispielsweise ein zusammenhängender Bereich einer virtuellen und/oder mathematischen Darstellung der Kontur, welcher einer Teilfläche in einem erfassten Bild zugeordnet wird, die aufgrund homogener oder annähernd homogener Eigenschaften hinsichtlich ihrer Schattierung und/oder Helligkeit und/oder Phasenlage der transmittierten und/oder reflektierten Beleuchtung als zusammenhänge Teilfläche erkannt bzw. beurteilt wird und sich dadurch von anderen Flächenelementen abgrenzt.

Eine Schattierung ist insbesondere ein Helligkeitsverlauf in den erfassten Bildern. Beispielsweise kann die Schattierung als ein linearer Helligkeitsverlauf vorliegen oder einen solchen umfassen. Vorzugsweise können auch verschiedene Bildfilter verwendet werden, um etwa weitere Bildkanäle zu erzeugen und eine Segmentierung und/oder Auswertung der Bilder anhand der derart erzeugten Bildkanälen durchzuführen. Beispielsweise kann die Beleuchtungseinrichtung eine phasengeschobene Beleuchtung bereitstellen, sodass bei Bildern, die mit zueinander phasengeschobener Beleuchtung erfasst wurden, auch Phasenbilder und/oder Amplitudenbilder und/oder Krümmungsbilder berechnet werden können.

Die Phasenlage der Beleuchtung der jeweiligen Teilfläche ist beispielsweise eine relative Phasenlage der erfassten Beleuchtung gegenüber anderen Teilflächen im erfassten Bild. Durch eine Änderung der Phase der Beleuchtung kann beispielsweise der räumliche Verlauf der Nut bzw. des Fassungsrandes besonders genau erfasst werden. Besonders vorteilhaft kann es für das Erfassen der Phasenlage sein, zumindest teilweise transparente Brillenfassungen mit Durchlichtbeleuchtung zu beleuchten, da auf diese Weise die Schattierung besonders zuverlässig ermittelt werden kann. Auch kann für das Erfassen der Phasenlage eine Bilderfassung unter Zuhilfenahme interferometrischer Mittel vorteilhaft sein, da auf diese Weise eine Verschiebung der Phasenlage besonders sensitiv erkannt werden kann.

Die unterschiedlichen vorbestimmten Perspektiven, aus denen die Bilder erfasst werden, sind dabei vorteilhaft, um die genaue Lage der Flächenelemente und/oder der Raumpunkte im Raum zu ermitteln, beispielsweise mittels Triangulation. Das Bestimmen des Satzes von Raumkurven erfolgt insbesondere anhand der Raumpunkte. Beispielsweise verläuft dabei eine Raumkurve durch diejenigen Raumpunkte, welche entlang des Verlaufs der Fassungsnut an der jeweils entsprechenden Querschnittposition der Fassungsnut bzw. Kontur liegen. Somit verlaufen die Raumkurven vorzugsweise parallel zur Kontur bzw. Fassungsnut, sodass der Satz von Raumkurven die jeweiligen Flächenelemente einschließt und der Kontur der Fassungsnut entspricht. Zusätzlich kann es vorteilhaft sein, mehrere Bilder zu erfassen, bei denen die gerichtete Beleuchtung aus unterschiedlichen vorbestimmten Perspektiven auf den Fassungsrand einfällt, da auf diese Weise die Schattierung besonders zuverlässig ermittelt werden kann.

Eine Vorrichtung zur Scheitelbrechwertbestimmung ist dabei beispielsweise ein Scheitelbrechwertmesser bzw. ein Lensmeter. Eine derartige Vorrichtung kann zur Messung des Scheitelwertes eines Brillenglases verwendet werden, wobei der Brechwert am Scheitel des Brillenglases in Form eines Einzelwertes ermittelt werden kann.

Die Bilderfassungseinrichtung kann beispielsweise einen oder mehrere Sensoren und/oder Kameras aufweisen. Beispielsweise können für jeden Fassungsrand ein separater Sensor und/oder eine separate Kamera bereitgestellt sein. Alternativ oder zusätzlich kann ein Sensor und/oder eine Kamera bereitgestellt sein, der beide Fassungsränder zeitgleich erfassen kann.

Die Bildauswerteeinheit und die Geometrie-Auswerteeinheit können als Recheneinheit ausgebildet sein und/oder in einer Recheneinheit implementiert sein. Dabei können die Bildauswerteeinheit und die Geometrie-Auswerteeinheit einer einzigen Recheneinheit oder separaten Recheneinheiten zugeordnet sein.

Die Erfindung bietet den Vorteil, dass die Konturen der Fassungsnuten einer Brillenfassung optisch mit nur wenigen Bildaufnahmen bestimmt werden können. Auch bietet die Erfindung den Vorteil, dass aufgrund der verwendeten gerichteten Beleuchtung die Konturen der Fassungsnuten besonders genau und zuverlässig bestimmt werden können, da insbesondere ein hoher optischer Kontrast erzielt werden kann. Auch bietet die Erfindung den Vorteil, dass durch die Auswertung der Schattierung in den erfassten Bildern eine besonders zuverlässige automatisierte Erkennung von Flächenelementen durchgeführt werden kann. Darüber hinaus bietet die Erfindung den Vorteil, dass eine besonders hohe räumliche Auflösung mit dem erfindungsgemäßen Verfahren erzielt werden kann, was insbesondere durch ein Auswerten der Phasenlage der jeweiligen Teilflächen erzielt werden kann, da sich mittels eines Vergleichs von Phasenlagen unterschiedlicher Teilflächen beispielsweise Längenunterschiede im Bereich der Wellenlänge des Lichts des Beleuchtung bestimmen lassen. Somit bietet die Erfindung den Vorteil, dass eine zuverlässige, einfache und sensitive Möglichkeit zur Bestimmung der Kontur bereitgestellt wird.

Der Vollständigkeit halber sei erwähnt, dass es erfindungsgemäß nicht nötig ist, eine mechanische Abtastung der Fassungsnut vorzunehmen. Vorzugsweise erfolgt das Bestimmen der Kontur der Fassungsnut demnach kontaktlos. Dies bietet den weiteren Vorteil, dass eine besonders hohe Genauigkeit erreicht werden kann, da keine Gefahr einer Verformung der Brillenfassung aufgrund einer mechanischen Abtastung besteht, was insbesondere bei sehr dünnen Fassungsrändern von Vorteil ist. Da es keiner manuellen Justierung der Vorrichtung bedarf, im Gegensatz zu beispielsweise mechanischen Tracern, kann auch dadurch eine besonders große Verlässlichkeit und Zuverlässigkeit sowie eine geringe Anfälligkeit für Fehlbedienungen realisiert werden. Auch ermöglicht die Erfindung eine besonders schnelle Bestimmung der Kontur, da vorzugsweise nur wenige Bildaufnahmen erforderlich sind.

Ferner bietet die Erfindung den Vorteil, dass keine hochpräzise zu kalibrierenden mechanischen Positioniereinheiten erforderlich sind. Dadurch kann ein großer Justageaufwand vermieden werden und die Fehleranfälligkeit reduziert werden. Auch können dadurch die Wartungskosten gesenkt werden.

Darüber hinaus bietet die Erfindung den Vorteil, dass die dreidimensionale Kontur der Fassungsnut im Profilschnitt bzw. Querschnitt bestimmt werden kann und diese somit beim Einschleifen der Gläser berücksichtigt werden kann. Dadurch lassen sich die Brillengläser beim Einschleifen besonders genau an die Brillenfassung anpassen, um einen bestmöglichen Halt der Brillengläser in der Fassung zu erzielen. Auch ermöglicht das Bestimmen der dreidimensionalen Kontur das zuverlässige und präzise Einschleifen von Brillengläsern für stark gekrümmte Fassungen, für welche eine lediglich in zwei Dimensionen bestimmte Kontur unter Umständen nicht ausreichend wäre. Ferner kann eine Optimierung des Glasdesigns auf Basis der Konturen der Fassungsnuten und Fassungsränder erfolgen, sodass die Gläser der fertigen Brille auch optionalen ästhetischen Anforderungen genügen. Beispielsweise kann dadurch erreicht werden, dass die Gläser der fertigen Brille möglichst exakt mit der vorderen Kante des Fassungsrandes abschließen.

Unter Glasdesign versteht man die räumliche Ausgestaltung bzw. Geometrie des Brillenglases, welche das Brillenglas nach Fertigstellung aufweist. Das Glasdesign kann beispielsweise von der Rezeptwirkung, dem Material des Brillenglases und von der Kontur der Brillenfassung abhängen, in welche das Glas eingesetzt werden soll. Auch kann das Glasdesign beispielsweise von anderen Parametern, wie etwa der Lage der Durchsichtpunkte und/oder den zu erwartenden Sehgewohnheiten des Benutzers abhängen, die sodann bei der Erstellung des Glasdesigns berücksichtigt werden können.

Auch bietet die Erfindung den Vorteil, dass die Bestimmung der Kontur der Fassungsnut durch die Verwendung einer Beleuchtungseinrichtung unabhängig vom Umgebungslicht erfolgen kann. Auch unter verschiedenen Umgebungslichtbedingen können auf diese Weise zuverlässig wiederholbare Resultate erzielt werden.

Zudem bietet die Erfindung den Vorteil, dass die Kontur(en) der Fassungsnut(en) sehr schnell erfasst werden können. Besonders bevorzugt sind nur wenige Bildaufnahmen erforderlich, um die Konturen zu erfassen. Auch kann die Erfindung den Vorteil bieten, dass sehr große bzw. lange Abschnitte der Kontur der Fassungsnut als jeweils zusammenhängende Teilfläche bzw. Flächenelement erfasst werden können. Beispielsweise kann sich zumindest ein Flächenelement über zumindest 10° des Innenwinkels des Fassungsrandes erstrecken.

Ferner umfasst die Erfindung vorzugsweise ein Bestimmen eines Satzes von Raumkurven auf Basis der in den jeweiligen Bildern zugeordneten Flächenelemente, wobei der Satz von Raumkurven der Kontur der Fassungsnut entspricht. Dies bietet den Vorteil, dass die Kontur besonders genau und zuverlässig bestimmt und/oder wiedergegeben werden kann.

Vorzugsweise umfasst das Verfahren ferner ein Ermitteln einer Mehrzahl von Raumpunkten anhand einer Verknüpfung der in den jeweils erfassten Bildern entsprechend zugeordneten Flächenelemente, welches dem Bestimmen des Satzes von Raumkurven vorausgeht, wobei das Bestimmen des Satzes von Raumkurven derart erfolgt, dass die Raumkurven jeweils durch zumindest einen Teil der Raumpunkte verlaufen. Dadurch können die Raumkurven auf besonders präzise Weise bestimmt werden.

Vorzugsweise weist die gerichtete Beleuchtung zumindest eines der folgenden Merkmale auf: kollimierte Beleuchtung, strukturierte Beleuchtung, Durchlicht-Beleuchtung, Auflicht-Beleuchtung, ultraviolette Beleuchtung und polarisierte Beleuchtung. Dies bietet den Vorteil, dass eine besonders definierte Beleuchtung bereitgestellt werden kann, die eine Vielzahl von Parametern bietet, welche eine Auswertung der erfassten Bilder ermöglicht. Eine gerichtete Beleuchtung ist dabei beispielsweise eine Beleuchtung, welche aus einer Richtung auf den Fassungsrand einfällt. Bevorzugt kann eine gerichtete Beleuchtung mittels einer Punktlichtquelle bereitgestellt werden. Besonders bevorzugt hat die gerichtete Beleuchtung den Effekt, dass an der Fassungsnut ein präziser Schattenwurf entsteht, welcher eine präzise zuordenbare Schattierung der Teilflächen zur Folge hat. Beispielsweise kann die Beleuchtungseinrichtung eine oder mehrere Glühlampen, eine LEDs und/oder eine Laserdioden umfassen. Vorzugsweise weist die Beleuchtungseinrichtung zumindest eines der folgenden Beleuchtungselemente aufweist: Diaprojektor, digitaler Streifenprojektor, Laserlinienprojektor und Laser-Punktmuster-Projektor. Eine Beleuchtungseinrichtung für die gerichtete Beleuchtung kann beispielsweise eine oder mehrere LEDs umfassen. Die Position der LED Beleuchtung ist vorzugsweise um bis zu 90° aus der Ebene der Kameras heraus positioniert, um eine ausreichende Streuung des Lichts an den Fassungsrändern in das Sichtfeld der Beleuchtungseinrichtung zu erzielen.

Vorzugsweise kann das Auswerten der Bilder ein Filtern der erfassten Bilder umfassen und/oder die Durchführung anderweitiger Vorverarbeitungsschritte insbesondere auf den Bildkanälen. Dies kann beispielsweise vorteilhaft zur weiteren Verarbeitung und/oder Auswertung der Bilder sein und/oder die Geometrie-Auswertung vereinfachen und/oder verbessern.

Das Auswerten und/oder Erfassen von Bildern kann vorzugsweise das Aufsummieren und/oder das Bilden einer Differenz mehrerer Bilder umfassen. Beispielsweise können Mittelwerte der Pixelhelligkeit für mehrere Erfasste Bilder berechnet werden und ein oder mehrere aus derartigen Mittelwerten zusammengesetzte Bilder für die weitere Bildauswertung verwendet werden.

Gemäß einer weiteren bevorzugten Ausführungsform kann die Vorrichtung dazu ausgelegt sein, eine kollimierte Beleuchtung der Fassungsränder, beispielsweise mittels einer Laserlinien-Projektion, bereitzustellen. Dabei werden vorzugsweise optische Merkmale auf die Fassungsränder projiziert, die in den Bilderfassungen aus den verschiedenen Perspektiven zueinander in Relation gebracht werden können und eine Bestimmung der Kontur erleichtern. Dies bietet den Vorteil, dass die Beleuchtung auf besonders definierte Weise bereitgestellt werden kann.

Beispielsweise kann die kollimierte Beleuchtung mittels einer Laserdiode oder mittels eines Lasers bereitgestellt werden. Alternativ oder zusätzlich kann ausgehend von einer divergent oder konvergent abstrahlenden Lichtquelle eine kollimierte Beleuchtung mittels Linsen und/oder gekrümmten Spiegeln erzielt werden.

Eine strukturierte Beleuchtung kann beispielsweise durch eine Projektion und/oder Abbildung eines Musters auf den Fassungsrand erzielt werden. Beispielsweise kann ein Strichmuster und/oder Punktmuster auf den Fassungsrand projiziert und/oder abgebildet werden, welches eine zuverlässige Bestimmung der Kontur ermöglicht. Beispielsweise kann die strukturierte Beleuchtung mittels einer Beleuchtungseinrichtung bereitgestellt werden, welche einen Diaprojektor, insbesondere zur Projektion eines statischen Musters, und/oder einen digitalen Streifenprojektor und/oder einen Laserlinienprojektor und/oder einen Laser-Punktmuster-Projektor umfasst. Beispielsweise kann die Bildauswerteeinheit dazu eingerichtet sein, die Bildpositionen der projizierten Mustermerkmale im Bild zu bestimmen. Beispielsweise kann die Geometrie-Auswerteeinheit dazu eingerichtet sein, aus den Bildpositionen korrespondierender bzw. verknüpfter Bildmerkmale jeweils die Raumposition des jeweiligen Merkmals zu berechnen bzw. zu bestimmen und daraus beispielsweise die Kontur zu bestimmen.

Die Beleuchtung mit einem Muster kann vorzugsweise mit der Bilderfassung eines Bildes mit kollimierter Beleuchtung kombiniert werden, um beispielsweise das Prinzip der Kantendetektion besonders zuverlässig anwenden zu können. Dies bietet den Vorteil, dass eine besonders zuverlässige Bestimmung der Kontur ermöglicht wird. Wird zur Musterprojektion beispielsweise ein digitaler Streifenprojektor verwendet, dann kann vorzugsweise mit dem bekannten Verfahren der phasenschiebenden Streifenprojektion eine Serie von phasengeschobenen Streifenbildern erfasst werden. Aus diesen Bildern kann beispielsweise mit bekannten Verfahren (wie z.B. Mittelwertbildung je Pixel über jeweils alle Bilder) ein gemitteltes Bild (sog. Basisintensität) und/oder ein Gradientenbild aus Phasengradienten und/oder ein Bild aus Amplitudenwerten berechnet werden. Auf dieses Bild kann die Kantendetektion besonders vorteilhaft angewendet werden.

Eine Durchlichtbeleuchtung kann beispielsweise durch eine Beleuchtung des Fassungsrandes von der der Bilderfassungseinrichtung gegenüberliegenden Seite des Fassungsrandes erreicht werden. Eine Durchlichtbeleuchtung kann insbesondere bei zumindest teilweise transparenten Brillenfassungen vorteilhaft sein, bei welchen die Beleuchtung zumindest teilweise durch die Brillenfassung und insbesondere zumindest teilweise durch die Fassungsränder hindurchdringen kann. Der Vorteil liegt darin, dass auch dann eine zuverlässige Bestimmung der Kontur ermöglicht wird, wenn eine mangelnde Reflektivität der Brillenfassung eine Bestimmung unter Verwendung ausschließlich einer Auflichtbeleuchtung nicht oder nur schwer möglich wäre.

Eine Auflichtbeleuchtung kann beispielsweise durch eine Beleuchtung des Fassungsrandes von der gleichen Seite des Fassungsrandes erfolgen, auf welcher auch die Bilderfassungseinrichtung angeordnet ist. Die Auflichtbeleuchtung bietet den Vorteil, dass von dem Fassungsrand reflektiertes und/oder gestreutes Licht erfasst werden kann. Eine Auflichtbeleuchtung kann insbesondere für nichttransparente Fassungsränder vorteilhaft sein, durch welche die Beleuchtung nicht oder zumindest nicht in ausreichendem Maße hindurchdringen kann.

Eine ultraviolette Beleuchtung kann beispielsweise mittels einer UV-Lampe und/oder mittels eines Lasers bereitgestellt werden. Eine ultraviolette Beleuchtung kann insbesondere dahingehend vorteilhaft sein, dass Spiegelungseffekte insbesondere auf metallischen Oberflächen reduziert werden können.

Eine polarisierte Beleuchtung kann beispielsweise durch die Verwendung einer polarisiert abstrahlenden Lichtquelle und/oder mittels eines Polarisationsfilters erreicht werden. Bevorzugt ist die polarisierte Beleuchtung eine linear polarisierte Beleuchtung. Dies bietet den Vorteil, dass die Reflexionseigenschaften der Beleuchtung auf den Fassungsrändern angepasst und/oder variiert werden können. Auch kann eine bestimmte Polarisation dahingehend vorteilhaft sein, dass eine Hervorhebung von Intensitätsunterschieden bzw. Helligkeitsunterschieden von verschiedenen Teilflächen bzw. Segmenten des Fassungsrandes erzielt werden kann und/oder eine Unterdrückung von störenden Reflexionen erreicht werden kann.

Vorzugsweise umfasst die Beleuchtung eine schaltbare Beleuchtung des Fassungsrandes, so dass Fassungsränder aus sowohl transparenten oder semi-transparenten Materialien, als auch aus nicht-transparenten Materialien, wie z.B. Metall, derart aufgenommen werden können, dass die verschiedenen Flächensegmente in den erfassten Bildern unterscheidbar sind. Dabei wird vorzugsweise bei semi-transparenten Materialien eine Durchlicht-Beleuchtung verwendet (sog. Backlight); bei opaken bzw. nicht-transparenten Materialien, wie z.B. Metall, wird vorzugsweise eine Auflicht-Beleuchtung verwendet, da ggf. bei semi-transparenten Materialien transmittiertes Licht und bei opaken Materialien reflektiertes Licht einen höheren optischen Kontrast liefert. Besonders vorteilhafterweise ist die Stärke der Beleuchtung, d.h. die Beleuchtungsintensität, an den Absorptionsgrad des Materials anpassbar - bei starker Absorption kann die Beleuchtungsintensität erhöht werden, bei starker Reflektivität oder Streuung kann die Beleuchtungsintensität reduziert werden.

Vorzugsweise erfolgt das Auswerten der erfassten Bilder zumindest teilweise mittels Bildsegmentierung. Dies bietet den Vorteil, dass eine automatisierte Bildauswertung von besonders großer Zuverlässigkeit erreicht werden kann. Die Bildsegmentierung bedient sich vorzugsweise zumindest eines der folgenden Hilfsmittel: Fassungsrandsegmentierung bzw. Segmentierung der Fassung, Detektion der Kontur des inneren Fassungsrandes, Kantendetektion und Vervollständigung von Kanten des Nutprofils mittels eines mathematischen Optimierungsverfahrens.

Die Fassungsrandsegmentierung bzw. Segmentierung der Fassung kann beispielsweise mittels einer Vorder-Hintergrundsegmentierung erfolgen, wofür eine Durchlichtbeleuchtung besonders vorteilhaft sein kann. Dabei wird vorzugsweise ein Bild der Silhouette der Fassung erzeugt, indem die Fassung zwischen Beleuchtung und Kamera platziert ist und sich die Fassung vom Hintergrund abhebt. Im Bild sind Pixel der Silhouette der Fassung dunkler als der Hintergrund. Somit ist beispielsweise durch Schwellwertverfahren eine Segmentierung der Fassung möglich, deren Ergebnis ein Binärbild ist. Zur weiteren Verbesserung des Kontrastes kann beispielsweise vor der Schwellwertbildung und Binarisierung ein Differenzbild aus dem Silhouetten-Bild und einem leeren Hintergrundbild ohne Fassung gebildet werden. Die Konturlinie des inneren Fassungsrands kann vorzugsweise mit gängigen Kantenextraktionsverfahren aus dem Binärbild abgeleitet werden z.B. mittels morphologischer Operatoren. Zur weiteren Steigerung der Genauigkeit kann vorzugsweise im Bereich der Fassungsrandkontur eine subpixelgenaue Kantendetektion durchgeführt werden. Dabei kann beispielsweise ein Subpixel-Canny Verfahren verwendet werden, wie in dem Dokument "Stable Segmentation of 2D Curves", A.W.J. Fritzgibbon, PhD thesis, 1997, University of Edinburgh, beschrieben.

Die Kantendetektion von Kanten, die zum Nutprofil gehören, kann insbesondere innerhalb des segmentierten Fassungsrandes bzw. des Binärbilds der Fassung erfolgen und die Detektion von Kanten bevorzugen, die parallel oder nahezu parallel zur Konturlinie des inneren Fassungsrands verlaufen. Dabei werden vorzugsweise Punkten oder Abschnitten der jeweiligen Linie Richtungsvektoren zugeordnet, die sich beispielsweise durch Gradientenbildung oder Ermittlung einer Pass-Geraden berechnen lassen. Kantenabschnitte, deren Richtungsvektor stärker als ein vorgegebener Maximalwinkel abweichen, werden optional von der weiteren Berechnung ausgeklammert.

Die Vervollständigung von Kanten mittels eines mathematischen Optimierungsverfahrens kann beispielsweise die Minimierung einer Kostenfunktion umfassen. Dabei wird vorzugsweise ein Modell der zu ermittelnden Konturlinien verwendet, das freie Parameter aufweist. Die Abstände der Kanten vom Modell gehen vorzugsweise in die Kostenfunktion als Datenterm ein. Beispielsweise kann ein leastsquares Ansatz hierfür gewählt werden. In einer Optimierungsschleife wird vorzugsweise ein Satz von Parametern ermittelt, für den die Kostenfunktion minimal wird. Zur Regularisierung können optional weitere Terme in die Kostenfunktion einbezogen werden, welche z.B. die Glattheit der jeweiligen Konturlinie bewerten. Das Modell kann beispielsweise eine komplexwertige Fourierreihe umfassen, wobei die freien Parameter die Koeffizienten der Reihe bestimmen und Real- und Imaginärteil jeweils die x- und y-Werte der Konturpunkte kodieren. Weitere verwendbare Konturmodelle können beispielsweise auf polynomialen Splines, NURBS oder Kegelschnitten basieren.

Vorzugsweise umfasst das Erfassen der Bilder aus den unterschiedlichen vorbestimmten Perspektiven ein Erfassen von Bildern aus voneinander unterschiedlichen vorbestimmten Betrachtungswinkeln um eine Drehachse. Dies bietet den Vorteil, dass die unterschiedlichen Perspektiven mit besonders geringem Aufwand und/oder besonders zuverlässig eingenommen werden können. Dazu kann beispielsweise die Brillenfassung in unterschiedlichen Winkeln relativ zur Bilderfassungseinrichtung angeordnet sein. Beispielsweise kann dazu die Brillenfassung in unterschiedliche Stellungen geschwenkt werden. Bevorzugt verläuft die Drehachse zum Schwenken der Brillenfassung parallel zur Oberkante der Brillenfassung. Alternativ oder zusätzlich kann jedoch auch die Position der Bilderfassungseinrichtung verändert werden, um das Erfassen von Bildern aus den unterschiedlichen Perspektiven und/oder Betrachtungswinkeln zu ermöglichen. Auch können mehrere Bilderfassungseinrichtungen verwendet werden, welche das Erfassen von Bildern aus unterschiedlichen vorbestimmten Betrachtungswinkeln bzw. Perspektiven ermöglichen, ohne dass ein Schwenken und/oder Verschieben der Brillenfassung und/oder der Bilderfassungseinrichtung erforderlich ist.

Vorzugsweise wird ferner ein Markerelement bereitgestellt, welches derart an einer eindeutig vorbestimmten Position angeordnet ist, dass mittels der erfassten Bilder eine eindeutige Positionierung des Fassungsrandes relativ zu dem Markerelement ermittelbar ist. Dies bietet die Möglichkeit, mittels des Markerelements die eindeutige Position der Brillenfassung und somit der Kontur der Fassungsnut relativ zur Bilderfassungseinrichtung zu ermitteln. Das Markerelement weist dazu vorzugsweise eine präzise definierte und vorzugsweise unveränderliche Position relativ zur Bilderfassungseinrichtung auf. Anhand der relativen Lage der Brillenfassung zum Markerelement kann somit die relative Lage der Brillenfassung zur Bilderfassungseinrichtung ermittelt werden.

Vorzugsweise weist das Markerelement mindestens ein ausgezeichnetes Merkmal auf, das in den erfassten Bilder der Bilderfassungseinrichtung und, sofern diese mehrere Kameras aufweist, in den Bildern aller beteiligten Kameras, mit hoher Genauigkeit zu lokalisieren ist, und das in einem festen räumlichen Bezug zum Fassungsrand steht. Dies bietet den Vorteil, dass eine Einfache Orientierung und/oder Positionsbestimmung in den erfassten Bildern ermöglicht wird. Insbesondere wird die Bildposition dieses Markerelements bestimmt, um die relative Position und Orientierung des Fassungsrandes zu den beteiligten Kameras zu bestimmen. Dies ermöglicht eine kostengünstige Realisierung der Kippeinrichtung, da auf eine wiederholbar genaue Positionierung der Brillenfassung in der Vorrichtung verzichtet werden kann. Dies ermöglicht ferner den Einsatz von kostengünstigen mechanischen Komponenten, wie etwa einer kostengünstigen Haltevorrichtung. Das Markerelement kann vorzugsweise teilweise transparent ausgebildet sein, um sowohl bei Auflicht-Beleuchtung als auch bei Durchlicht-Beleuchtung eines oder mehrere ausgezeichnete Merkmale ermitteln zu können. Ein ausgezeichnetes Merkmal ist dabei ein solches Merkmal, dessen Position in den erfassten Bildern mit hoher Zuverlässigkeit und großer Genauigkeit eindeutig bestimmt werden kann.

Vorzugsweise umfasst die Vorrichtung eine Haltevorrichtung, wobei die Haltevorrichtung dazu ausgelegt ist, die Brille relativ zur Beleuchtungseinrichtung und zur Bilderfassungseinrichtung positionsfest und orientierungsfest zu halten. Vorzugsweise ist die Haltevorrichtung ferner dazu ausgelegt, die Brille in zumindest zwei verschiedenen Orientierungen relativ zur Beleuchtungseinrichtung und zur Bilderfassungseinrichtung zu halten, wobei die zumindest zwei verschiedenen Orientierungen voneinander unterschiedliche vorbestimmte Betrachtungswinkel der Bilderfassungseinrichtung auf den Fassungsrand festlegen. Besonders bevorzugt ist die Bilderfassungseinrichtung dazu ausgelegt, die Brillenfassung um eine Drehachse zu drehen bzw. zu schwenken, um der Bilderfassungseinrichtung das Erfassen von Bildern des beleuchteten Fassungsrandes aus zumindest zwei und besonders bevorzugt mehreren unterschiedlichen vorbestimmten Perspektiven zu ermöglichen.

Vorzugsweise weist die Haltevorrichtung einen Brillenhalter mit einem Federelement zur stabilen Halterung der Brille in verschiedenen Schwenkpositionen auf.

Dies ermöglicht eine einfache Befestigung und Entnahme der Brille, sowie einen sicheren Halt der Brille während der Bestimmung der Kontur der Fassungsnut.

Vorzugsweise ist die erfindungsgemäße Vorrichtung ferner dazu ausgelegt, zumindest eine der beiden folgenden Eigenschaften von Brillengläsern einer in der Vorrichtung gehaltenen Brille zu ermitteln: Scheitelbrechwert und ortsaufgelöste Brechwertkarte. Mit anderen Worten ist die Vorrichtung vorzugsweise als Scheitelbrechmesser und oder als Vorrichtung zur Messung einer ortsaufgelösten Brechwertkarte ausgebildet und kann in einer weiteren Funktion zur Bestimmung der Kontur einer Fassungsnut bzw. zur Bestimmung der Konturen beider Fassungsnuten verwendet werden. Dies bietet den Vorteil, dass ein und dasselbe Gerät für mehrere Zwecke verwendet werden kann und demnach die Anzahl der benötigten Geräte zur Anpassung und/oder Fertigstellung einer Brille reduziert werden kann. Insbesondere bietet dies den Vorteil, dass besonders bevorzugt dieselbe Beleuchtungseinrichtung, dieselbe Bildauswerteeinheit und dieselbe Haltevorrichtung für die verschiedenen Zwecke verwendet werden können.

Vorzugsweise können die Konturen beider Fassungsnuten, d.h. der jeweiligen Fassungsnut beider Fassungsränder, im Rahmen einer Messung bestimmt werden. Besonders bevorzugt kann das Erfassen der beiden Konturen gleichzeitig erfolgen. Dies ermöglicht eine besonders schnelle Bestimmung der Konturen. Beispielsweise kann die Bildauswerteeinheit dazu eingerichtet sein, in jeder Bildaufnahme beide Fassungsränder zu erfassen. Dazu kann beispielsweise die Bilderfassungseinrichtung dazu ausgelegt sein, die beiden Fassungsränder im Bildbereich zu erfassen. Alternativ oder zusätzlich kann die Bilderfassungseinrichtung mehrere Sensoren und/oder Kameras aufweisen, um jeden Fassungsrand mit einem separaten Sensor und/oder einer separaten Kamera zu erfassen. Vorzugsweise umfasst die Bilderfassungseinrichtung zumindest zwei Kameras. Besonders bevorzugt ist jede der beiden Kameras derart ausgerichtet, dass die optische Achse der jeweiligen Kamera durch eine der beiden Fassungsränder bzw. Konturen bzw. durch die vom jeweiligen Fassungsrand aufgespannte Öffnung der Brille verläuft.

Vorzugsweise weist die Bilderfassungseinrichtung zumindest eine "high dynamic range" (HDR) Kamera auf. Alternativ oder zusätzlich umfasst die Bilderfassung die Aufnahme jeweils mehrerer Bilder je Anordnung bzw. Schwenkposition der Brillenfassung unter Verwendung einer Serie von Beleuchtungszuständen (z.B. verschiedene Beleuchtungsintensitäten), so dass sowohl der Übergang vom Fassungsrand zur Nut als auch der Nutgrund in jeweils mindestens einem der Bilder der Serie der Beleuchtungszustände mit einem geeigneten Beleuchtungszustand deutlich sichtbar gemacht werden.

Vorzugsweise wird eine Interpolation von Abständen zwischen den Raumkurven des Satzes von Raumkurven vorgenommen, um etwa im Fall von lokalen Verdeckungen der Konturen im Bild dennoch die Kontur vollständig bestimmen zu können. Dies ist insbesondere bei einer Beschränkung der Verkippung bzw. Schwenkung der Brillenfassung um eine horizontale Achse vorteilhaft, da in diesem Fall die Konturen an den linken und rechten Fassungsrändern in allen Drehstellungen verdeckt sein können. Ähnliches gilt vorzugsweise für die oberen unteren Fassungsränder bei Beschränkung der Drehung um eine vertikale Achse.

Vorzugsweise erfolgt eine iterative Anwendung der Bild-Auswerteeinheit und der Geometrie-Auswerteeinheit in einer Optimierungsschleife, wobei die Ergebnisse der Geometrie-Auswerteeinheit jeweils verwendet werden, um diese als weitere Eingabe in die Bild-Auswerteeinheit einfließen zu lassen. Mit anderen Worten werden die Schritte des Auswertens der erfassten Bilder, des Ermittelns der Mehrzahl von Raumpunkten und des Bestimmens des Satzes von Raumkurven wiederholt in einer Iterationsschleife durchgeführt. Der Vorteil einer solchermaßen optionalen erweiterten Bild-Auswerteeinheit ist die Präzisierung der Detektionsergebnisse - vor allem in Regionen mit geringem Kontrast können auf diese Weise die Ergebnisse der Kantendetektion verbessert werden.

Vorzugsweise ist die Geometrie-Auswerteeinheit ferner dazu eingerichtet, eine Mehrzahl von Raumpunkten anhand einer Verknüpfung der in den jeweils erfassten Bildern entsprechend zugeordneten Flächenelemente zu ermitteln, welches dem Bestimmen des Satzes von Raumkurven vorausgeht, und den Satz von Raumkurven derart zu bestimmen, dass die Raumkurven jeweils durch zumindest einen Teil der Raumpunkte verlaufen. Dies bietet den Vorteil, dass die Raumkurven besonders präzise bestimmt werden können.

Es versteht sich, dass die oben genannten und im Folgenden erläuterten Merkmale und Ausführungsformen nicht nur in den jeweils explizit genannten Kombinationen als offenbart anzusehen sind, sondern dass auch andere technisch sinnhafte Kombinationen und Ausführungsformen vom Offenbarungsgehalt umfasst sind.

Weitere Einzelheiten und Vorteile der Erfindung sollen nun anhand von den folgenden Beispielen und bevorzugten Ausführungsformen mit Bezug auf die Figuren näher erläutert werden.

Es zeigen:

Fig. 1          eine Vorrichtung 10 zum kontaktlosen Bestimmen einer Kontur einer Fassungsnut;

Fig. 2          eine Haltevorrichtung 28 gemäß einer bevorzugten Ausführungsform;

Fig. 3A bis 3C  eine Haltevorrichtung 28 einer Vorrichtung 10 gemäß einer bevorzugten Ausführungsform in drei unterschiedlichen perspektivischen Darstellungen;

Fig. 4A und 4B  beispielhaft erfasste Bilder einer Brillenfassung;

Fig. 5          eine schematische Darstellung einer beispielhaft ermittelten bzw. rekonstruierten Kontur einer Fassungsnut 12c in einem Fassungsrand;

Fig. 6          eine beispielhafte Darstellung einer Bilderfassung aus verschiedenen Perspektiven;

Fig. 7A bis 7C    beispielhafte Erläuterungen zur Modellierung der Kontur.

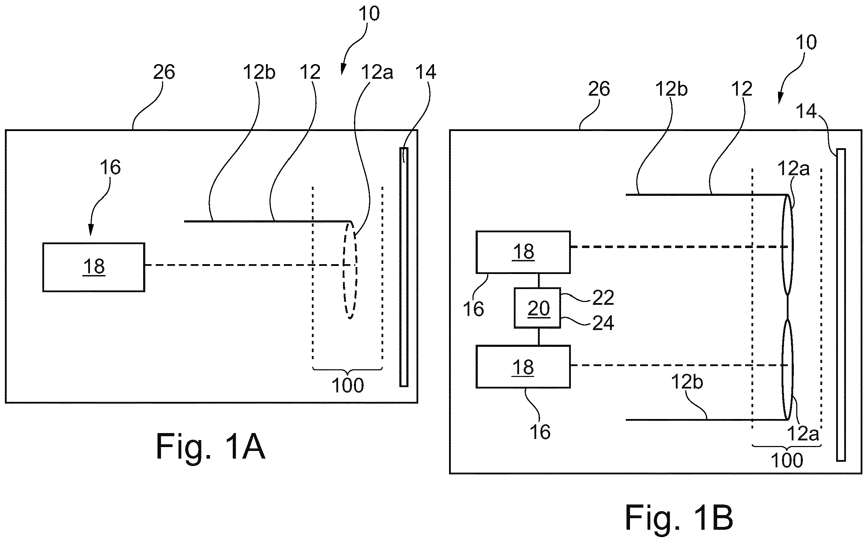

Die Figuren 1A und 1B zeigen in einer schematischen Darstellung eine Vorrichtung 10 zum kontaktlosen Bestimmen einer Kontur einer Fassungsnut in einem Fassungsrand einer Brillenfassung 12 in Seitenansicht (Figur 1A) bzw. in Draufsicht (Figur 1B) gemäß einer bevorzugten Ausführungsform.

Die Vorrichtung 10 weist eine Beleuchtungseinrichtung 14 auf, welche gemäß der gezeigten Ausführungsform als ein Display ausgebildet ist. Das Display kann beispielsweise ein handelsübliches Computer-Display umfassen oder als solches ausgebildet sein. Die Beleuchtungseinrichtung 14 ist dazu ausgelegt, den Fassungsrand der Brillenfassung 12 entlang des gesamten Umfangs des Fassungsrandes 12a mit einer gerichteten Beleuchtung zu versehen. Die Brillenfassung 12 umfasst dabei zwei Fassungsränder 12a und zwei Bügel 12b.

Ferner weist die Vorrichtung 10 eine Bilderfassungseinrichtung 16 auf, mittels welcher mehrere Bilder der beleuchteten Fassungsränder 12a erfasst werden können. Die Brillenfassung 12 ist dabei zwischen der Bildauswerteeinheit 16 und der Beleuchtungseinrichtung 14 angeordnet, sodass die von der Beleuchtungseinrichtung 14 bereitgestellte gerichtete Beleuchtung als Durchlichtbeleuchtung zumindest teilweise durch den Fassungsrand 12a bzw. die Fassungsränder 12a der Brillenfassung 12 hindurchtritt und von der Bilderfassungseinrichtung 16 erfasst wird. Gemäß der gezeigten Ausführungsform umfasst die Bilderfassungseinrichtung 16 zwei optische Kameras 18, welche derart angeordnet sind, dass deren optischen Achsen durch die von den Fassungsrändern 12a der Brillenfassung 12 aufgespannten Öffnungen hindurch verlaufen. Die Kameras 18 sind dabei derart eingestellt, dass die Fassungsränder 12a der Brillenfassung 12 innerhalb eines Fokusbereichs 100 der Kameras 18 angeordnet sind, sodass die Bilderfassungseinrichtung 16 eine scharfe bzw. fokussierte Abbildung der Fassungsränder 12a erfassen kann. Die beiden Kameras 18 sind dabei derart nebeneinander angeordnet, dass deren seitlicher Abstand in etwa dem Abstand der beiden Mittelpunkte der von den Fassungsrändern 12a aufgespannten Öffnungen entspricht. Allerdings sind auch andere Anordnungen der Kameras 18 möglich, mit welchen eine Abbildung der Fassungsränder 12a ermöglicht wird.

Gemäß anderen Ausführungsformen kann die Bilderfassungseinrichtung auch nur eine Kamera bzw. einen Sensor oder mehr als zwei Kameras bzw. Sensoren aufweisen, mittels welcher Bilder der Fassungsränder 12a erfasst werden können. Alternativ kann die Vorrichtung 10 gemäß anderen Ausführungsformen dazu ausgelegt sein, nur die Kontur der Fassungsnut eines der beiden Fassungsränder 12a einer Brillenfassung 12 zu bestimmen. Mit einer derartigen Vorrichtung können sodann die Kontur der beiden Nuten der Fassungsränder 12a sequentiell nacheinander erfasst werden.

Ferner ist die Bilderfassungseinrichtung 16 derart schwenkbar, dass die Bilderfassungseinrichtung 16 aus unterschiedlichen vorbestimmten Perspektiven Bilder von den Fassungsrändern 12a erfassen kann. Alternativ oder zusätzlich kann die Vorrichtung 10 eine geeignete Haltevorrichtung aufweisen, mittels welcher die Brillenfassung 12a in unterschiedlichen Orientierungen angeordnet werden kann, um mit der Bilderfassungseinrichtung 16 Bilder aus unterschiedlichen vorbestimmten Perspektiven zu umfassen.

Gemäß der gezeigten Ausführungsform weist die Vorrichtung 10 ferner eine Recheneinheit 20 auf, in welche eine Bildauswerteeinheit 22 und eine Geometrie-Auswerteeinheit 24 integriert bzw. implementiert sind. Gemäß einer anderen Ausführungsform können die Bildauswerteeinheit 22 und die Geometrie-Auswerteeinheit 24 auch in separaten Recheneinheiten ausgebildet sein. Die Recheneinheit weist dabei eine Datenkommunikationsverbindung zu der Bilderfassungseinrichtung auf, um die erfassten Bilder zu empfangen und auszuwerten.

Die Bildauswerteeinheit 22 wertet die von der Bilderfassungseinrichtung 16 erfassten und bereitgestellten Bilder aus und ordnet darin enthaltenen Teilflächen jeweils einem Flächenelement der Fassungsnut zu. Die Zuordnung erfolgt anhand der Schattierung und/oder der Helligkeit der jeweiligen Teilfläche.

Die Geometrie-Auswerteeinheit 24 bestimmt sodann eine Mehrzahl von Raumpunkten im Raum, d.h. im Objektraum der Brillenfassung 12, anhand einer Verknüpfung der Flächenelemente in den erfassten Bildern aus unterschiedlichen Perspektiven und bestimmt einen Satz von Raumkurven. Diese Verknüpfung kann vorzugsweise mittels Triangulation erfolgen. Die Raumkurven verlaufen jeweils durch zumindest einen Teil der Raumpunkte. Der Satz von Raumkurven entspricht dabei der Kontur der Fassungsnut.

Zudem weist die Vorrichtung 10 ein Gehäuse 26 auf, welches die anderen Komponenten der Vorrichtung 10 umschließt. Vorzugsweise ist das Gehäuse 26 lichtundurchlässig und derart ausgestaltet, dass die in dem Gehäuse 26 angeordneten Komponenten der Vorrichtung 10 von Umgebungslicht abgeschirmt werden. Dies bietet den Vorteil, dass eine störende Hintergrundbeleuchtung beim Bestimmten der Kontur(en) vermieden werden kann und daher die Genauigkeit und/oder Verlässlichkeit der Bestimmung erhöht werden können. Auch kann das Bestimmen der Kontur(en) unabhängig von der Helligkeit und/oder der Ausleuchtung der Umgebung erfolgen.

Bevorzugt handelt es sich bei der Vorrichtung 10 gemäß der gezeigten Ausführungsform um eine Vorrichtung 10, die auch zur Bestimmung des Scheitelbrechwertes und/oder zum Erstellen einer ortsaufgelösten Brechwert-Karte ausgelegt ist. Mit anderen Worten kann die Vorrichtung 10 dazu ausgelegt sein, sowohl den Scheitelbrechwert zu bestimmen und/oder eine ortsaufgelöste Brechwert-Karte zu bestimmen, als auch die Kontur(en) der Nuten der Fassungsränder 12a zu bestimmen. Dies bietet den Vorteil, dass beispielsweise von einem Optiker mit einem einzigen Gerät mehrere Aufgaben bzw. Funktionen durchgeführt werden können.

Beispielsweise kann eine Brillenfassung bzw. Brillenfassung 12 ohne Gläser in der Vorrichtung 10 angeordnet werden, um die Konturen der Fassungsränder zu bestimmen. In einer weiteren Messung kann sodann die Brillenfassung 12 mitsamt Brillengläsern erneut in der Vorrichtung 10 angeordnet werden, um den Scheitelbrechwert zu und/oder eine ortsaufgelöste Brechwert-Karte zu bestimmen.

Bevorzugt sind die Kameras als hochauflösende Kameras mit zumindest 10 Mega-Pixel ausgebildet. Die Vorrichtung ist vorzugsweise dazu eingerichtet, mittels der Kameras die optische Wirkung der beiden in die Brille eingesetzten Brillengläser über die gesamte Sehfläche der Brillenfassung 12 zeitgleich zu vermessen. Die Kameras sind vorzugsweise genau aufeinander kalibriert, beispielsweise mit einer Genauigkeit von 1/10 mm oder besser, und auf eine Haltevorrichtung zum Halten der Brillenfassung 12 gerichtet. Das Display der Beleuchtungsvorrichtung 14 kann dabei vorzugsweise dazu eingerichtet sein, ein optisches Muster anzuzeigen, sodass mit der Bilderfassungseinrichtung 16 bzw. mit den Kameras ein Bild bzw. mehrere Bilder des Musters durch die Brillengläser hindurch erfasst werden kann bzw. können. Vorzugsweise sind die Kameras derart justiert, dass die Fokuslage genau auf die Brillengläser der Brillenfassung 12 eingestellt ist.

Vorzugsweise kann mittels einer Haltevorrichtung die Brillenfassung 12 mechanisch hochpräzise in Position gehalten werden und verschoben und/oder geschwenkt bzw. gedreht werden, sodass mit der Bilderfassungseinrichtung Bilder von den beleuchteten Fassungsrändern aus zumindest zwei vorbestimmten Perspektiven erfasst werden können, die ein Bestimmen der Konturen 34 der Nuten 12c der Fassungsränder 12a erlauben.

Vorzugsweise ermöglicht die Vorrichtung, beispielsweise mittels einer Haltevorrichtung 28, zumindest eine der drei im folgenden genannten mechanischen Bewegungen der Brillenfassung bzw. Brillenfassung 12 in Relation zu den Kameras bzw. zur Bilderfassungseinrichtung 16:

A) Translation der Brillenfassung relativ zu den Kameras (bspw. horizontal oder vertikal)
B) Rotation der Brillenfassung an den Kameras vorbei (bspw. relativ zu einer horizontal verlaufenden Drehachse)
C) Kombination von Rotation und Translation

Dabei ist denkbar, dass die Kameras relativ zur Brillenfassung bewegt werden und/oder die Brillenfassung relativ zu den Kameras bewegt wird. Im Falle der Rotation (Möglichkeit B und/oder C) kann die Drehachse frei im Raum liegen - d.h. die Drehachse muss nicht notwendigerweise parallel zu einer der sonstigen Geraden oder Flächen liegen.

Gemäß einer besonders bevorzugten Ausführungsform wird die Brillenfassung inkl. Ihrer Fassungsränder 12a um eine horizontale Drehachse 200 geschwenkt, wobei die Drehachse parallel zu einer Verbindungslinie senkrecht zu den optischen Achsen der beiden Kameras angeordnet ist. Dadurch wird ermöglicht, dass die Brillenfassungsränder 12a auch bei Drehung sowohl im Fokusbereich als auch im vertikal und horizontal limitierten Sichtfeld der Kameras liegen.

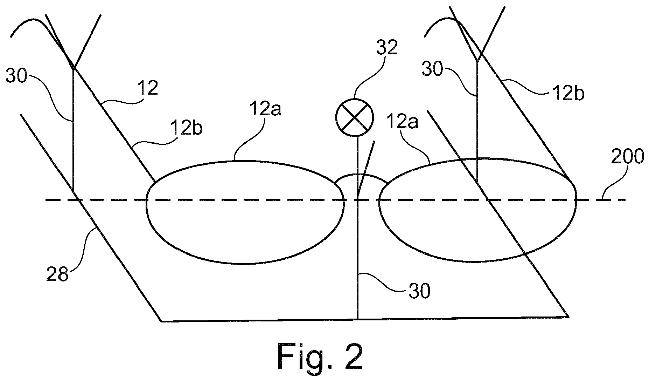

Vorzugsweise wird eine Vielzahl von Bildern der Fassungsränder aus einer Mehrzahl von Perspektiven bzw. Blickwinkeln erfasst. Besonders bevorzugt ist die Vorrichtung und das Verfahren derart eingerichtet, dass die Fassungsränder in den unterschiedlichen Positionen bzw. Anordnungen im Blickfeld der Kameras nicht abgeschattet werden. Auch ist eine hochpräzise mechanische Haltevorrichtung (siehe bspw. Figur 2) von Vorteil, mit welcher die Änderung der Positionierung und/oder Orientierung der von Brillenfassung kontrollierbar ist und zu einer kontrollierbaren Positionierung und/oder Orientierung der Brillenfassung führt. Insbesondere ist die Vorrichtung vorzugsweise derart ausgebildet, dass die Brillenfassung durch die Haltevorrichtung derart fixiert ist, dass sich Position und/oder Orientierung der Brillenfassung 12 bzw. der Brillenfassung auch bei einer Änderung der Positionierung und/oder Orientierung relativ zur Haltevorrichtung nicht verändert.

Figur 2 zeigt in einer schematischen Darstellung eine Haltevorrichtung 28 gemäß einer bevorzugten Ausführungsform, mittels welcher eine Brillenfassung 12 bzw. eine Brillenfassung in einer Vorrichtung 10 gehalten bzw. fixiert werden kann.

Die Haltevorrichtung 28 weist drei Haltearme 30 auf, mittels welchen die Brillenfassung 12 in einer bestimmten Position und/oder Orientierung relativ zur Bilderfassungseinrichtung 16 gehalten bzw. fixiert werden kann. Gemäß der gezeigten Ausführungsform fixiert einer der Haltearme 30 den Steg der Brillenfassung 12, während die anderen beiden Haltearme 30 jeweils einen der Bügel 12b fixieren. Die Brillenfassung 12 kann dabei einfach auch die Haltearme 30 aufgelegt sein. Bevorzugt sind die Haltearme 30 jedoch derart ausgebildet, dass diese die Brille fest fixieren und auch gegen ein Verrutschen sichern.

Beispielsweise können die Haltearme 30 in Ihrer Höhe bzw. Länge veränderlich sein, sodass die Brillenfassung 12 zumindest teilweise um die Drehachse 200 in einem vorgegebenen Winkelbereich geschwenkt bzw. gedreht werden kann. Beispielsweise können dazu die Längen der hinteren Haltearme 30 verlängert und/oder der vordere Haltearm 30 verkürzt werden, sodass die Brillenfassung 12 nach vorne geneigt wird und umgekehrt. Dazu können beispielsweise die Haltearme 30 als Teleskoparme ausgebildet sein. Alternativ oder zusätzlich kann beispielsweise die gesamte Haltevorrichtung 28 drehbar bzw. schwenkbar bzw. neigbar ausgebildet sein, um ein Schwenken der Brillen 12 um die Drehachse 200 zu ermöglichen.

Auch kann gemäß anderen Ausführungsformen die Drehachse 200 an anderer Stelle angeordnet sein und/oder in eine andere Richtung verlaufen. In diesem Fall ist dann die Haltevorrichtung 28 vorzugsweise dazu eingerichtet, die Brillenfassung 12 um die jeweilige Drehachse 200 zu schwenken.

Ferner weist die Haltevorrichtung 28 gemäß der gezeigten Ausführungsform ein Markerelement 32 auf, welches relativ zur Haltevorrichtung 28 in seiner Position und Orientierung fixiert ist. Auch ist die Vorrichtung 10 vorzugsweise derart eingerichtet und kalibriert, dass die Position und Orientierung des Markerelements relativ zur Bilderfassungseinrichtung präzise bekannt sind, um eine genaue Position der Kontur der Fassungsränder 12a in den durch die Bilderfassungseinrichtung 16 erfassten Bilder möglichst exakt bestimmen zu können, wenngleich die relative Position und/oder Orientierung der Brillenfassung 12 zur Bilderfassungseinrichtung 16 zunächst nicht exakt ermittelt wurde. Mit anderen Worten kann das Markerelement 32 vorzugsweise dazu dienen, einen Bezugspunkt für die Ermittlung der genauen Position und/oder Orientierung der Kontur(en) der Brillenfassung 12 bereitzustellen.

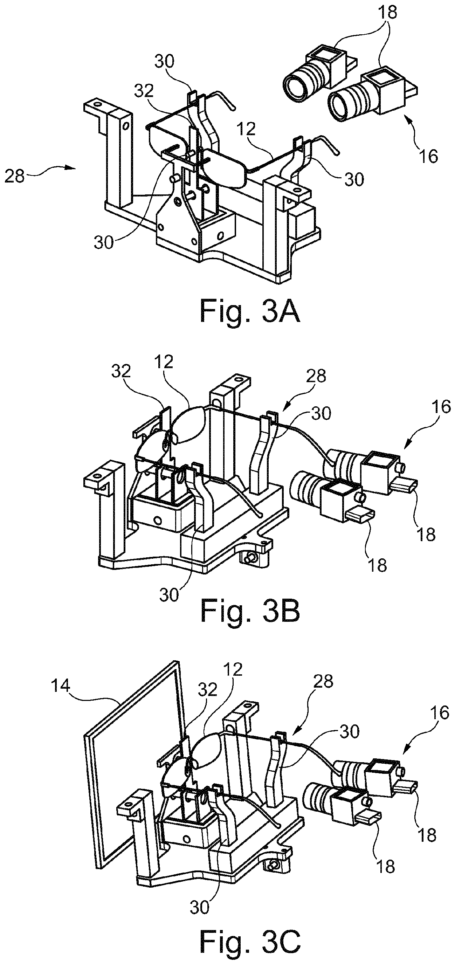

Die Figuren 3A bis 3C zeigen eine Haltevorrichtung 28 einer Vorrichtung 10 gemäß einer bevorzugten Ausführungsform in drei unterschiedlichen perspektivischen Darstellungen.

Dabei ist eine Brillenfassung 12 in einer Haltevorrichtung 28 derart befestigt, dass drei Haltearme 30 der Haltevorrichtung 28 die Brillenfassung 12 fixieren. Gemäß der gezeigten Ausführungsform sind die hinteren beiden Haltearme 30, welche die Bügel 12b der Brille fixieren, starr ausgebildet. Der vordere Haltearm 30 ist hingegen beweglich ausgebildet und ermöglich ein Anheben und/oder Absenken des Fassungsränder 12a, um das Erfassung von Bildern von den Fassungsrändern 12a aus einer anderen Perspektive zu ermöglichen. Der Hauptgriff zur Fixierung der Brillenfassung 12 erfolgt demnach geklemmt am Steg der Brillenfassung und fixiert die Brillenfassung 12 auch bei einer Änderung ihres Schwerpunkts. Ferner wird die Fassung bei Bedarf an beiden Bügeln 12b eingespannt, so dass flexible Bügel, wie z.B. bei Titanflex Brillen, das Sichtfeld der Bilderfassungseinrichtung 16 nicht verdecken.

In diesem Ausführungsbeispiel hält die Haltevorrichtung 28 die Brillenfassung in einer horizontalen Lage vor den Kameras 18 der Bilderfassungseinrichtung 16. Aus dieser Lage heraus kann die Brillenfassung um einen oder mehrere vorbestimmte Winkel um eine horizontale Drehachse nach oben und unten um präzise definierte Winkel, beispielsweise mittels eines Schrittmotors, gedreht werden. Während dieser Zeit macht die Bilderfassungseinrichtung je diskret eingenommener Position Aufnahmen von der Fassung sowie deren Fassungsrändern.

Zur Verbesserung der Rekonstruktion der Fassungsrand-Geometrie kann der Algorithmus vorzugsweise mittels verschiedener Beleuchtungs-Setups des Fassungsrands unterstützt werden. Beispielsweise können Beleuchtungen eingesetzt werden, die eine Streifenprojektion umfassen.

Das Markerelement 32 ist als integraler Bestandteil des vorderen Haltearms 30 ausgebildet, wodurch auf einfache Weise eine fixierte Positionierung und Orientierung des Markelements 32 relativ zur Haltevorrichtung 28 erreicht wird.

In Figur 3C ist zudem die Beleuchtungseinrichtung 14 gezeigt, welche die Beleuchtung zum kontaktlosen Bestimmen der Kontur(en) der Fassungsnut 12c und zum Bestimmen des Scheitelbrechwertes und/oder der ortsaufgelösten Brechwertkarten bereitstellt.

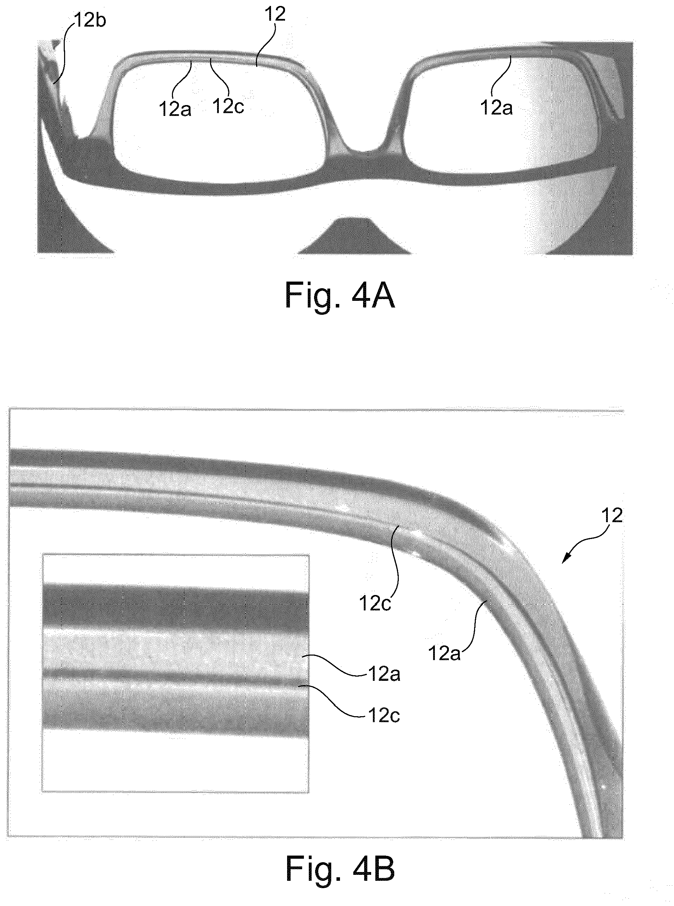

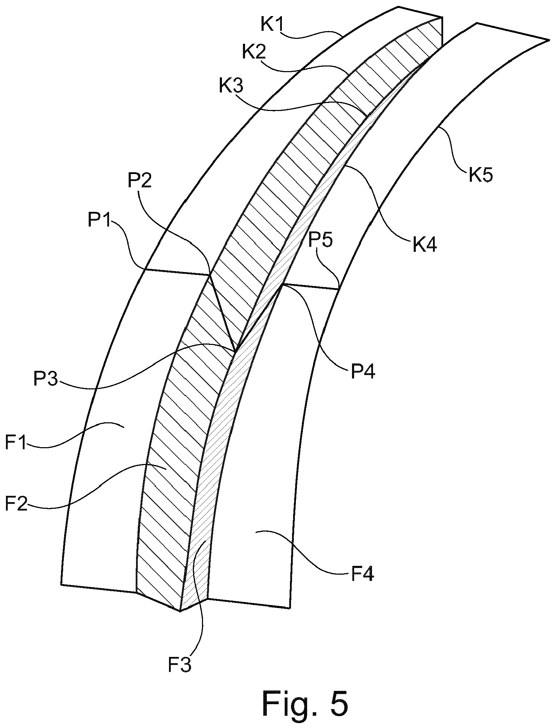

Die Figuren 4A und 4B zeigen beispielhaft erfasste Bilder einer Brillenfassung, welche den Fassungsrand 12a der Brillenfassung 12 zeigen. Die Fassungsränder 12a wurden dabei mit einer Durchlichtbeleuchtung beleuchtet, welche die Fassungsnut 12c in den jeweiligen Fassungsrändern 12a in den Bildern deutlich hervortreten lässt. Figur 5B zeigt zwei vergrößerte Ansichten von Ausschnitten eines der Fassungsränder 12a, welche die Fassungsnut 12c noch deutlicher zeigt. Insbesondere ist dabei erkennbar, dass die Fassungsnuten 12c anhand einer Schattierung verschiedener Teilflächen erkannt werden können, da die Fassungsnuten 12c aufgrund der Vertiefung einen Schattenwurf bei Beleuchtung verursachen. Der Schattenwurf kann daher in den erfassten Bildern als Teilflächen mit unterschiedlicher Schattierung bzw. unterschiedlicher Helligkeit erkannt und erfasst werden. Teilflächen mit gleicher Schattierung können daher vorzugsweise mit hoher Genauigkeit einem Flächenelement zugeordnet werden.

Die von der Bilderfassungseinrichtung erfassten Bilder aus unterschiedlichen vorbestimmten Perspektiven, die jeweils beispielsweise wie in Figur 4A und 5B dargestellt vorliegen können, werden dann der Bildauswerteeinheit zugeführt. Das Auswerten der erfassten Bilder wird im Folgenden beispielhaft anhand einer bevorzugten Ausführungsform erläutert.

Eine Bildauswertung, die beispielsweise auf bekannten Methoden zur Bildsegmentierung beruhen kann, ist dazu ausgelegt, die zu einzelnen Teilflächen bzw. Flächensegmenten des Fassungsrandes bzw. der Fassungsnut gehörenden Bildbereiche zu detektieren. Geeignete Methoden sind im Stand der Technik bekannt und beispielsweise in der online Enzyklopädie Wikipedia unter dem Begriff "Imagesegmentation" beschrieben.

Beispielsweise kann dabei folgendes Vorgehen verwendet werden:

- Fassungsrandsegmentierung, insbesondere mit Hilfe eines im Durchlicht aufgenommenen Bildes und Vorder-Hintergrundsegmentierung;
- Kantendetektion innerhalb des segmentierten Fassungsrandes mit Bevorzugung von Kanten, die nahezu parallel zum Fassungsrand verlaufen;

- Vervollständigung der Kanten mit Hilfe eines Optimierungsverfahrens, bei dem eine Kostenfunktion minimiert wird

Als Ergebnis der Bildauswertung kann beispielsweise ein Satz von Flächenelementen F1 bis F4 und/oder von Raumkurven K1, K2, K3, K4 und K5 und für jedes Bild im Bildstapel eine Punkteliste aus Raumpunkten bzw. ein Polygonzug aus Bildpunkten gegeben. Diese werden beispielsweise an die Geometrie-Auswerteeinheit übergeben.

Die Kantendetektion kann beispielsweise mit Hilfe eines entsprechend trainierten neuronalen Netzes vorgenommen werden. Dabei annotiert beispielsweise ein menschlicher Experte den Fassungsrand und die Kanten einer Vielzahl möglichst unterschiedlicher Fassungen. Anschließend wird beispielsweise ein neuronales Netz auf Basis dieser Daten so trainiert, dass bei unbekannten Fassungen der Fassungsrand und die zu den Raumkurven K1 bis K5 gehörenden Kanten im Bild bestimmt werden. Vorteilhaft ist dabei beispielsweise ein zweistufiges Verfahren, wobei zunächst der Fassungsrand jeweils im gesamten Bild bestimmt wird und basierend auf dem Fassungsrand eine Menge von Bildfenstern entlang des Fassungsrandes bestimmt wird. Vorteilhaft ist die Verwendung von Bildfenstern fester Größe. Die Kanten die im Bild zu den Raumkurven K2, K3, K4 gehören, werden somit jeweils innerhalb der Bildfenster bestimmt.

Anstatt eines neuronalen Netzes können beispielsweise auch andere Methoden des maschinellen Lernens verwendet werden, wie etwa eine Hauptkomponentenanalyse (PCA) und Support Vector Machines (SVM).

Figur 5 zeigt in einer schematischen Darstellung einer ermittelten bzw. rekonstruierten Kontur einer Fassungsnut 12c in einem Fassungsrand. Für die Ermittlung bzw. Rekonstruktion der Kontur 34 wurde modellhaft ein V-förmiger Profilschnitt der Kontur angenommen. Im Querschnitt ist die Kontur durch die Raumpunkte P1 bis P5 festgelegt bzw. bestimmt. Die Raumpunkte P1, P2, P4 und P5 kennzeichnen dabei den Fassungsrand, während P3 den Boden der Einkerbung bzw. Vertiefung der Fassungsnut 12c bestimmt. Die "V-Form" der Nut wird daher insbesondere durch die beispielhaft dargestellten Raumpunkte P2, P3 und P4 aufgespannt. Wenngleich die beispielhaften Raumpunkte P1 bis P5 nur für eine Querschnittsposition entlang der Kontur dargestellt sind, weist selbstverständlich jede Querschnittposition entsprechende Raumpunkte auf. Die Lage der Raumpunkte P1 bis P5 wird dabei durch eine Verknüpfung der jeweiligen Punkte in den Bildern, die aus unterschiedlichen vorbestimmten Perspektiven erfasst wurden, bestimmt. Dies kann beispielsweise mittels Triangulation erfolgen.

Ferner ist die Kontur durch die Raumkurven K1 bis K5 bestimmt, wobei die Raumkurven K1 bis K5 durch die jeweiligen Raumpunkte P1 bis P5 verlaufen sowie durch alle anderen Raumpunkte, welche an der jeweiligen Position des Querschnitts angeordnet sind. Mit anderen Worten verläuft die Raumkurve K1 durch den Raumpunkt P1 und durch alle Punkte, welche im Querschnitt durch den Fassungsrand an anderer Position entlang des Fassungsrandes dem Punkt P1 entsprechen. Entsprechendes gilt für die Raumkurven K2 bis K5 und die Raumpunkte P2 bis P5. Außerdem werden gemäß der beschriebenen bevorzugten Ausführungsform Flächensegmente F1 bis F4 modelliert, welche zwischen den jeweils benachbarten Raumkurven verlaufen. So verläuft beispielsweise das Flächensegment F1 zwischen den Raumkurven K1 und K2 etc.

Anhand der Raumkurven K1 bis K5 und insbesondere anhand der Flächensegmente F1 bis F5 kann sodann die Kontur 34 der Fassungsnut 12c nachgebildet bzw. bestimmt werden und als Information für die Anpassung des jeweiligen Brillenglases, beispielsweise für das Einschleifen, bereitgestellt werden.

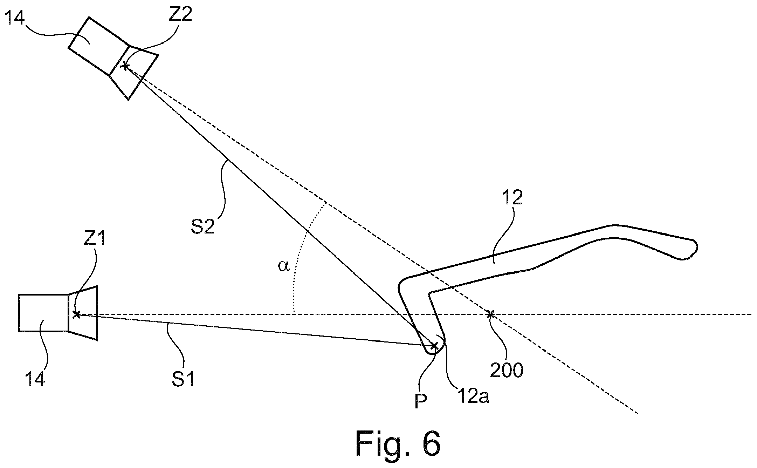

Figur 6 zeigt in einer schematischen Darstellung das Erfassen mehrerer Bilder des beleuchteten Fassungsrandes 12a aus unterschiedlichen vorbestimmten Perspektiven gemäß einer bevorzugten Ausführungsform.

Dabei ist die Bilderfassungseinrichtung 16 aus zwei verschiedenen Perspektiven auf die Brillenfassung 12 bzw. den Fassungsrand 12a gerichtet, wobei sich die zwei Perspektiven dadurch unterscheiden, dass die Bilderfassungseinrichtung 16 aus unterschiedlichen Positionen bzw. Orientierungen auf die Brillenfassung 12 gerichtet ist. Die verschiedenen Positionen bzw. Orientierungen bzw. Perspektiven entsprechen dabei unterschiedlichen Winkelpositionen um die Drehachse 200, wobei die unterschiedlichen Winkelpositionen einen Winkel α einschließen.

Wenngleich in Figur 6 zwei Bilderfassungseinrichtung 16 dargestellt sind, kann es sich dabei um eine einzige Bilderfassungseinrichtung 16 handeln, die in beiden Fällen in unterschiedlichen Positionen relativ zur Brillenfassung 12 angeordnet ist. Die unterschiedlichen Positionen der Bilderfassungseinrichtung 16 relativ zur Brillenfassung 12 kann durch eine Bewegbarkeit der Brillenfassung 12 und/oder der Bilderfassungseinrichtung 16 realisiert werden. Die optische Achse der Bilderfassungseinrichtung 16 ist dabei jeweils als eine gestrichelte Linie dargestellt. Die Bilderfassungseinrichtung 16 weist bevorzugt zwei Kameras auf, welche auf jeweils einen Fassungsrand 12a der Brillenfassung der Brillenfassung 12 gerichtet sind.

Im Folgenden wird anhand Figur 6 ein beispielhaftes Verfahren zur Kalibrierung und zum Bestimmen der Konturen der Fassungsnuten der Brillenfassung 12 bzw. der Funktion der Geometrie-Auswerteeinheit erläutert.

In einem ersten Schritt erfolgt eine intrinsische Kalibrierung, wobei insbesondere die Bilderfassungseinrichtung 16 kalibriert wird, so dass die Zuordnung von Kamerapixeln der Kameras der Bilderfassungseinrichtung 16 zu Sichtstrahlen im Koordinatensystem der jeweiligen Kamera bekannt ist. Beispielhafte Sichtstrahlen sind als S1 und S2 gekennzeichnet.

Ferner erfolgt eine Kalibrierung der Position und Orientierung der Drehachse 200 relativ zu den Kameras der Bilderfassungseinrichtung 16 in den verschiedenen Positionen und/oder Orientierungen um die Drehachse 200. Dies kann entweder im Rahmen eines Kalibrierschritts mit Hilfe eines Kalibrierobjekts mit bekannter Geometrie geschehen, z.B. mit einer Tafel mit aufgedrucktem Schachbrettmuster, oder mit Hilfe eines mit der Fassung in festem räumlichen Bezug stehenden Markerelements 32 (siehe bspw. Figur 2), dessen räumliche Position und Orientierung relativ zur Bilderfassungseinrichtung 16 mit Hilfe eines einzelnen aufgenommenen Bildes bestimmt werden kann. Insgesamt sind nach diesem Schritt die Positionen der optischen Zentren Z1 und Z2 und der Achse A im Raum bekannt. Des Weiteren ist nach diesem Schritt eine Zuordnung von Kamerapixeln beider Bilder, d.h. der Bilder aus den zwei verschiedenen Perspektiven, zu Sichtstrahlen im Raum bekannt.

Zudem erfolgt eine Bestimmung von Epipolarebenen zur Bestimmung der Verknüpfung von Kamerapixeln des Bildes aus der ersten Perspektive zu Ebenen aus Kamerasichtstrahlen des Bildes aus der zweiten Perspektive. Ein derartiges Verfahren ist im Stand der Technik als Epipolargeometrie bekannt und ist beispielweise in der online Enzyklopädie Wikipedia erläutert. Die Gesamtmenge der Epipolarebenen verläuft immer durch beide optischen Zentren Z1 und Z2. Eine Bestimmung der Verknüpfung von Bildpunkten des ersten Bildes zu Mengen von Bildpunkten des zweiten Bildes (im allgemeinen Fall bilden diese Pixelmengen Epipolarkurven; bei Verwendung von zusätzlicher Bildentzeichnung im Rahmen der intrinsischen Kalibrierung bilden sie Epipolarlinien; bei Verwendung von zusätzlicher Bildrektifizierung liegen diese auf den Bildspalten des zweiten Kamerabildes).

Weiterhin erfolgt eine Auswahl eines Bildpunkts Q1 im ersten Kamerabild, d.h. des Kamerabildes aus der ersten Perspektive, der zu einem beliebigen gesuchten Raumpunkt P auf dem Fassungsrand auf einer Raumkurven Kj gehört. Als Basis für die Auswahl des Bildpunktes Q1 sind die von der Bildauswerteeinheit bereitgestellten Polygonzüge, die Raumkurven zugeordnet sind.

Sodann erfolgt eine Bestimmung einer Epipolarebene und einer Punktemenge M2 von Bildpunkten des zweiten Kamerabildes, d.h. des Bildes aus der zweiten Perspektive, welche jeweils dem Bildpunkt Q1 zugeordnet sind bzw. mit diesem Verknüpft sind. Somit enthält die Epipolarebene insbesondere den Sichtstrahl S1. Insbesondere enthält die Epipolarebene den gesuchten Raumpunkt P.

Anschließend erfolgt eine Bestimmung des Bildpunktes Q2 aus der Punktmenge M2 auf Basis eines Polygonzugs zur Raumkurve Kj im zweiten Bild. Dabei kann beispielsweise eine Schnittpunktbestimmung durchgeführt werden, wobei die Epipolarkurve bzw. die Epipolarebene zu M2 mit dem Polygonzug geschnitten wird. Bei Verwendung von Bildrektifizierung kann die Darstellung des Polygonzugs bereits auf Basis der Bildspalten gewählt werden, so dass der zugehörige Bildpunkt direkt abgelesen werden kann.

Zudem erfolgt eine Triangulation der Sichtstrahlen S1 und S2. Aus der Kenntnis von Q1 und Q2 kann unter Zuhilfenahme der Kalibrierinformation der intrinsischen Kalibrierung aus Q1 der Sichtstrahl S1 und aus Q2 der Sichtstrahl S2 bestimmt werden. Der Punkt kleinsten Abstands im Raum zu S1 und S2 bildet dabei einen Näherungswert für den gesuchten Punkt P.

Das beschriebene Verfahren kann sodann iterativ für alle Raumpunkte der Raumkurven durchgeführt werden, um die gesamte Kontur zu erfassen.

Eine effiziente Bestimmung der Epipolarebenen ergibt sich durch Verwendung von Bild-Entzeichnung im Rahmen der intrinsischen Kalibrierung und von BildRektifizierung im Rahmen der Bestimmung der Epipolarebenen, so dass die Epipolarebenen, die den Pixeln einer Bildspalte im ersten Bild zugeordnet sind, zueinander identisch sind, und umgekehrt die Epipolarebenen, die den Kamerapixeln einer Bildspalte im zweiten Bild zugeordnet sind, ebenfalls identisch sind. Bei Verwendung von mehr als zwei vorbestimmten Perspektiven empfiehlt sich zur effizienteren Berechnung vorzugsweise die Konstruktion von Epipolarlinienbildern.

Ferner kann es vorteilhaft sein, die Triangulation der Sichtstrahlen für alle Raumpunkte P einer Raumkurve gemeinsam durchzuführen und dabei das Kriterium des kleinsten Abstandes als Optimierungsziel in Form eines Terms einer Kostenfunktion in eine iterative Optimierung einfließen zu lassen. Ferner können vorzugsweise weitere Terme in die Kostenfunktion aufgenommen werden, wie beispielsweise eine Glattheitsbedingung der Raumkurven. Da die Nut im Rahmen eines Fertigungsprozesses erstellt wird, können beispielsweise gewisse Glattheitsannahmen getroffen werden. Dabei kann eine numerische Berechnung von Tangentialvektoren an die Raumkurven durchgeführt werden und ein Maß über die Differenzen benachbarter Tangentialvektoren in die Kostenfunktion aufgenommen werden. Auch statistische Maße sind möglich, z.B. mit Hilfe einer Hauptkomponentenanalyse über eine Vielzahl von bekannten Nutformen von Brillenfassungen.

Für die Abschätzung der Genauigkeit der Lage der Konturkurven des Nutprofils wurden gemäß der beispielhaft erläuterten Ausführungsform folgende Daten verwendet:

| | |
|---|---|
| Bildgröße der Kamera [pixel]: | 3840 x 2748 (10,6 MP) |
| Messfeld [mm]: | 150 x 107,3 |
| Objektseitige Pixelgröße [mm]: | 0,039 |

Für die Genauigkeit der Kantendetektion wird aufgrund der Unschärfe (Defocus) und eines sich optional ergebenden geringen Kontrasts der durch die Schattierungsunterschiede erzeugten Konturlinie keine subpixelgenaue Detektion angesetzt. Die objektseitige Pixelgröße wird hier als Maß für die Ungenauigkeit angesetzt.

Für Konturlinien mit hohem Kontrast können hingegen subpixelgenaue Detektionstechniken zu höherer Genauigkeit gelangen. In der industriellen Messtechnik können Subpixelgenauigkeiten von ca. 1/5 bis zu 1/20 tel Pixel angesetzt werden, (siehe zB ZEISS O-SELECT: object pixel size ca 35 pm; spezifizierte Messgenauigkeit 4,5 pm siehe "https://www.zeiss.de/messtechnik/produkte/systeme/optischemesstechnik/o-select.html" sowie "https://applications.zeiss.com/C1257A26006EFF9E/0/A6DDC43030E4AAFBC12 57F0100378040/$FILE/O-SELECT_DE_60_020_0003l.pdf"), heruntergeladen am 30. September 2019 .

Eine Technik zur Subpixel-genauen Konturbestimmung ist der subpixel-Canny-Edge-Filter [siehe: Rafael Grompone von Gioi, Gregory Randall: "A Sub-Pixel Edge Detector: an Implementation of the Canny/Devernay Algorithm", 2017, " https://www.ipol.im/pub/art/2017/216/article_lr.pdf"]. Weitere Techniken siehe Wikipedia: https://en.wikipedia.Org/wiki/Edge_detection#Subpixel, heruntergeladen am 30. September 2019.

Auch wurde eine Abschätzung des dreidimensionalen Fehlers bei der Triangulierung vorgenommen.

Bei einer Drehung der Fassung um einen Winkel ß=30 Grad zum Zweck der Bestimmung des Raumpunkte der Konturkurven mittels Triangulierung erhält man folgende Beziehung für die Bestimmung des Fehlers $\Delta z$ in Richtung der optischen Achse der Kamera, im Folgenden "z-Richtung" genannt:

$$tan\beta = \frac{\Delta x}{\Delta z}$$

bzw.

$$\Delta z = \frac{\Delta x}{tan\beta}$$

Bei ß=30 Grad und einem lateralen Fehler der Konturdetektion von $\Delta x$ =40 $\mu$m erhält man somit eine Abweichung in z-Richtung von $\Delta z$ = 1,73 • $\Delta x$ = 69 $\mu$m.

In der Praxis kann zudem das Profil bzw. die Kontur der Nut von der modellhaft angenommenen V-Form insofern abweichen, als die Spitze des V einen Krümmungsradius aufweist.

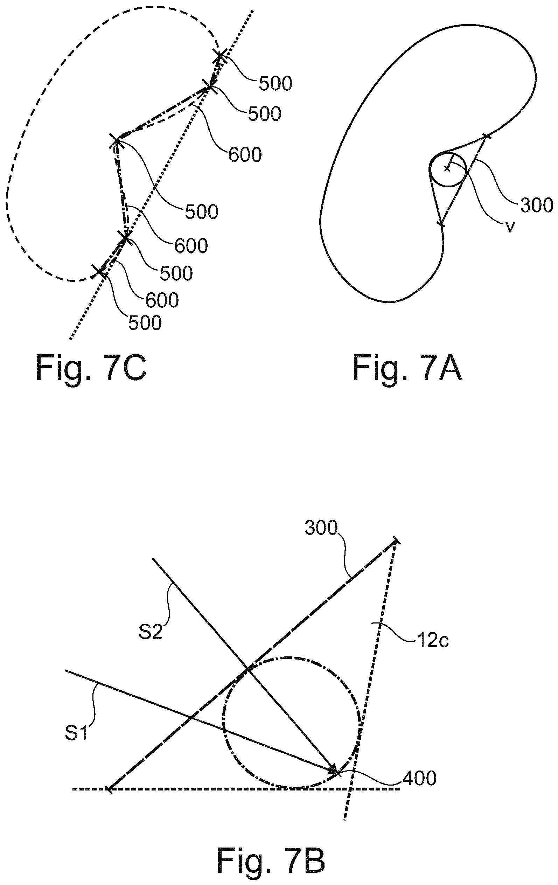

Als Beispiel ist im Folgenden ein CT-Scan einer Metallfassung verwendet worden. Figur 7A zeigt beispielhaft einen Querschnitt des Fassungsrandes der mittels CT-Scan erfassten Brillenfassung, bei welcher die Spitze bzw. der Boden der Fassungsnut einen Krümmungsradius r von 0,15 mm aufweist. der V-Winkel weist einen Winkel von ca. 80° auf. Die Messung der Länge der Strecke 300, welche den Abstand der beiden oberen Enden des "V" bezeichnet, ergab 0,9 mm.

Bei Betrachtung des Nutgrundes aus zwei unterschiedlichen vorbestimmten Perspektiven, beispielsweise entlang der Sichtstrahlen S1 und S2, ist in diesem Modell das Zentrum des Grauwertübergangs bzw. Helligkeitsübergangs identisch mit dem Zentrum des Nutgrundes (siehe Figur 7B). Ähnliches gilt für alle für die Messung herangezogenen Grauwertübergänge bzw. Helligkeitsübergänge. Insgesamt ergibt sich ein Polygonzugmodell für die Kontur der Fassungsnut, wobei die Knotenpunkte 500 des Polygonzuges auf den Zentren der Kreisbögen 600 des der Fassungsnut 12c liegen, wie beispielhaft in Figur 7C dargestellt.

**Bezugszeichenliste**

| | |
|---|---|
| 10 | Vorrichtung |
| 12 | Brillenfassung |
| 12a | Fassungsrand der Brille |
| 12b | Bügel der Brille |
| 12c | Fassungsnut |
| 14 | Beleuchtungseinrichtung |
| 16 | Bilderfassungseinrichtung |
| 18 | Kamera |
| 20 | Recheneinheit |
| 22 | Bildauswerteeinheit |
| 24 | Geometrie-Auswerteeinrichtung |

| 26 | Gehäuse |
| 28 | Haltevorrichtung |
| 30 | Haltearm |
| 32 | Markerelement |
| 34 | Kontur |
| 100 | Fokusbereich der Bilderfassungseinrichtung |
| 200 | Drehachse |
| 300 | Verbindungsstrecke zwischen den oberen Enden des "V" |
| 400 | Position des Grauwertübergangs |
| 500 | Knotenpunkte |
| 600 | Kreisbögen |
| S1, S2 | Sichtstrahlen |
| Z1, Z2 | optische Zentren der Bilderfassungseinrichtung 16 |
| Q1 | Bildpunkt im ersten Kamerabild |
| Q2 | Bildpunkt im zweiten Kamerabild |
| P | Raumpunkt auf dem Fassungsrand |

**Patentansprüche**

1. Verfahren zum Bestimmen einer Kontur (34) einer Fassungsnut (12c) in einem Fassungsrand (12a) einer Brillenfassung (12)mit den Schritten:

   - Beleuchten des Fassungsrandes (12a);
   - Erfassen mehrerer Bilder des beleuchteten Fassungsrandes (12a) aus unterschiedlichen vorbestimmten Perspektiven;
   - Auswerten der erfassten Bilder und Bestimmen einer Raumkurve der Fassungsnut (12c) anhand der ausgewerteten Bilder;

   **dadurch gekennzeichnet, dass**

   - das Beleuchten des Fassungsrandes (12a) entlang des gesamten Umfangs des Fassungsrandes (12a) mittels einer gerichteten Beleuchtung erfolgt; und
   - das Auswerten der erfassten Bilder ein Zuordnen von in den erfassten Bildern enthaltenen Teilflächen zu jeweils einem Flächenelement (F1,..., F5) der Fassungsnut (12c) anhand zumindest einer der folgenden Eigenschaften umfasst: Schattierung der jeweiligen Teilfläche, Helligkeit der jeweiligen Teilfläche und Phasenlage der Beleuchtung der jeweiligen Teilfläche.

2. Verfahren gemäß Anspruch 1, ferner umfassend ein Bestimmen eines Satzes von Raumkurven (K1,..., K5) auf Basis der in den jeweils erfassten Bildern zugeordneten Flächenelemente (F1,..., F5), wobei der Satz von Raumkurven (K1,..., K5) der Kontur (34) der Fassungsnut (12c) entspricht.

3. Verfahren gemäß Anspruch 2, ferner umfassend ein Ermitteln einer Mehrzahl von Raumpunkten (P1,..., P5) anhand einer Verknüpfung der in den jeweils erfassten Bildern entsprechend zugeordneten Flächenelemente (F1,..., F5), welches dem Bestimmen des Satzes von Raumkurven (K1, ..., K5) vorausgeht, wobei das Bestimmen des Satzes von Raumkurven (K1, ..., K5) derart erfolgt, dass die Raumkurven (K1,..., K5)jeweils durch zumindest einen Teil der Raumpunkte (P1,..., P5) verlaufen.

4. Verfahren gemäß einem der vorhergehenden Ansprüche, wobei die gerichtete Beleuchtung zumindest eines der folgenden Merkmale aufweist: kollimierte Beleuchtung, strukturierte Beleuchtung, Durchlicht-Beleuchtung, Auflicht-Beleuchtung, ultraviolette Beleuchtung und polarisierte Beleuchtung.

5. Verfahren gemäß einem der vorhergehenden Ansprüche, wobei das Auswerten der erfassten Bilder zumindest teilweise mittels Bildsegmentierung erfolgt.

6. Verfahren gemäß einem der vorhergehenden Ansprüche, wobei das Erfassen der Bilder aus den unterschiedlichen vorbestimmten Perspektiven ein Erfassen von Bildern aus voneinander unterschiedlichen vorbestimmten Betrachtungswinkeln um eine Drehachse (200) umfasst.

7. Vorrichtung (10) zum kontaktlosen Bestimmen einer Kontur (34) einer Fassungsnut in einem Fassungsrand (12a) einer Brillenfassung (12), umfassend:

- eine Beleuchtungseinrichtung (14), welche dazu ausgelegt ist, den Fassungsrand (12a) zu beleuchten;
- eine Bilderfassungseinrichtung (16), welche dazu eingerichtet ist, mehrere Bilder des beleuchteten Fassungsrandes (12c) aus unterschiedlichen vorbestimmten Perspektiven zu erfassen;
- eine Bildauswerteeinheit (24), welche dazu eingerichtet ist, die erfassten Bilder auszuwerten und die ausgewerteten Bilder für eine Bestimmung einer Raumkurve der Fassungsnut (12c) bereitzustellen;

**dadurch gekennzeichnet, dass**

- die Beleuchtungseinrichtung dazu ausgelegt ist, den Fassungsrand (12a) entlang des gesamten Umfangs des Fassungsrandes (12a) mit einer gerichteten Beleuchtung zu beleuchten;
- das Auswerten der erfassten Bilder ein Zuordnen von in den erfassten Bildern enthaltenen Teilflächen zu jeweils einem Flächenelement (K1,..., K5) der Fassungsnut anhand zumindest einer der folgenden Eigenschaften umfasst: Schattierung der jeweiligen Teilfläche, Helligkeit der jeweiligen Teilfläche und Phasenlage der Beleuchtung der jeweiligen Teilfläche.

8. Vorrichtung gemäß Anspruch 7, ferner umfassend eine Geometrie-Auswerteeinheit (24), welche dazu eingerichtet ist, einen Satz von Raumkurven (K1,..., K5) auf Basis der in den jeweils erfassten Bildern zugeordneten Flächenelemente (F1,..., F5) zu bestimmen, wobei der Satz von Raumkurven (K1,..., K5) der Kontur (34) der Fassungsnut (12c) entspricht.

9. Vorrichtung (10) gemäß Anspruch 7 oder 8, wobei die Beleuchtungseinrichtung (14) zumindest eines der folgenden Beleuchtungselemente aufweist: Diaprojektor, digitaler Streifenprojektor, Laserlinienprojektor und Laser-Pun ktmuster-Projektor.

10. Vorrichtung (10) gemäß einem der Ansprüche 7 bis 9, ferner umfassend zumindest ein Markerelement (32), wobei das Markerelement (32) derart eindeutig an einer vorbestimmten Position angeordnet ist, dass mittels der erfassten Bilder eine eindeutige Positionierung des Fassungsrandes (12a) relativ zu dem Markerelement (32) ermittelbar ist.

11. Vorrichtung (10) gemäß einem der Ansprüche 7 bis 10, ferner umfassende eine Haltevorrichtung (28), wobei die Haltevorrichtung (28) dazu ausgelegt ist, die Brille relativ zur Beleuchtungseinrichtung (14) und zur Bilderfassungseinrichtung (16) positionsfest und orientierungsfest zu halten.

12. Vorrichtung (10) gemäß Anspruch 11, wobei die Haltevorrichtung (28) ferner dazu ausgelegt ist, die Brille (12) in zumindest zwei verschiedenen Orientierungen relativ zur Beleuchtungseinrichtung (14) und zur Bilderfassungseinrichtung (16) zu halten, wobei die zumindest zwei verschiedenen Orientierungen voneinander unterschiedliche vorbestimmte Betrachtungswinkel der Bilderfassungseinrichtung (16) auf den Fassungsrand (12a) festlegen.

13. Vorrichtung (10) gemäß einem der Ansprüche 7 bis 12, wobei die Vorrichtung ferner dazu ausgelegt ist, zumindest eine der beiden folgenden Eigenschaften eines von einer in der Vorrichtung (10) gehaltenen Brillenfassung (12) gefassten Brillenglases zu ermitteln: Scheitelbrechwert und ortsaufgelöste Brechwertkarte.

14. Computerprogrammprodukt, das ein nicht-flüchtiges, computerlesbares Speichermedium umfasst, auf dem ein ausführbarer Programmcode gespeichert ist, der konfiguriert ist, um eine Vorrichtung (10) nach einem der Ansprüche 7 bis 13 dazu zu veranlassen, ein Verfahren nach einem der Ansprüche 1 bis 6 durchzuführen.

15. Verfahren zum Einschleifen eines Brillenglases in eine Brillenfassung, wobei eine Kontur (34) einer Fassungsnut (12c) in einem Fassungsrand (12a) der Brillenfassung (12) mittels eines Verfahrens gemäß einem der Ansprüche 1 bis 6 bestimmt wurde oder bestimmt wird.

16. Computerimplementiertes Verfahren zur Bestimmung einer Geometrie eines Brillenglases unter Verwendung einer Kontur (34) einer Fassungsnut (12c) in einem Fassungsrand (12a) einer Brillenfassung (12), für welche das Brillenglas bereitgestellt werden soll, wobei die Kontur (34) mittels eines Verfahrens gemäß einem der Ansprüche 1 bis 6 bestimmt wurde oder bestimmt wird.

Fig. 1A

Fig. 1B

EP 3 809 371 A1

Fig. 2

EP 3 809 371 A1

Fig. 4A

Fig. 4B

20

Fig. 3A

Fig. 3B

Fig. 3C

Fig. 5

Fig. 6

EP 3 809 371 A1

Fig. 7C

Fig. 7A

Fig. 7B

Europäisches Patentamt
European Patent Office
Office européen des brevets

## EUROPÄISCHER RECHERCHENBERICHT

**Nummer der Anmeldung**

EP 19 20 3172

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 199 19 311 C1 (WERNICKE & CO GMBH [DE]) 15. Februar 2001 (2001-02-15) * das ganze Dokument * ----- | 1-4,6-8, 13-16 | INV. G06T7/521 G06T7/593 B24B9/14 G01B11/24 |
| X,D | DE 199 37 647 C1 (WERNICKE & CO GMBH [DE]) 19. Juli 2001 (2001-07-19) * das ganze Dokument * ----- | 1-9, 12-16 | |
| T | Bernd Jähne: "Auszug aus Kapitel 8.2 und 14.2" In: "DIGITALE BILDVERARBEITUNG.", 2002, BERLIN : SPRINGER VERLAG., DE 028378, XP055688529, ISBN: 978-3-540-41260-1 Seite 217-226,396-401, ----- | 1-16 | |

**RECHERCHIERTE SACHGEBIETE (IPC)**

B24B
G01B
B24D
G06T

Der vorliegende Recherchenbericht wurde für alle Patentansprüche erstellt

| Recherchenort | Abschlußdatum der Recherche | Prüfer |
|---|---|---|
| Den Haag | 22. April 2020 | Neubüser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 3172

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2020

| Im Recherchenbericht angeführtes Patentdokument | Datum der Veröffentlichung | Mitglied(er) der Patentfamilie | Datum der Veröffentlichung |
|---|---|---|---|
| DE 19919311 C1 | 15-02-2001 | KEINE | |
| DE 19937647 C1 | 19-07-2001 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19937647 C1
- DE 4019866 A1
- FR 2763707 A
- DE 4224640 A
- US 9316489 B2
- DE 19727226 A1

**In der Beschreibung aufgeführte Nicht-Patentliteratur**

- Stable Segmentation of 2D Curves. **A.W.J. FRITZ-GIBBON.** PhD thesis. University of Edinburgh, 1997
- **RAFAEL GROMPONE VON GIOI ; GREGORY RANDALL.** A Sub-Pixel Edge Detector. *Implementation of the Canny/Devernay Algorithm,* 2017, https://www.ipol.im/pub/art/2017/216/article_lr.pdf
- *Weitere Techniken siehe Wikipedia,* 30. September 2019, https://en.wikipedia.Org/wiki/Edge_detection#Subpixel